# EUROPEAN PATENT APPLICATION

(11) **EP 3 793 302 A1**
(43) Date of publication of application: **17.03.2021**
(21) Application number: 18918347.8
(22) Date of filing: 08.05.2018
(51) Int. Cl.: H04W 72/12, H04W 72/04, H04W 92/18

(54) **COMMUNICATION DEVICE**

(71) Applicant: NTT DOCOMO, INC., Chiyoda-ku Tokyo 100-6150 (JP)
(72) Inventor: OSAWA, Ryosuke, Tokyo 100-6150 (JP); YASUKAWA, Shinpei, Tokyo 100-6150 (JP); NAGATA, Satoshi, Tokyo 100-6150 (JP)
(74) Representative: Hoffmann Eitle
(86) International application number: PCT/JP2018/017850
(87) International publication number: WO 2019/215823

(57) **Abstract**

A communication apparatus including: a reception unit configured to receive assignment information of an uplink resource from a base station; and a transmission unit configured to transmit, to the base station, by the uplink resource, a signal received by a sidelink resource associated with the uplink resource.

## Description

### [Technical Field]

The present invention relates to a communication apparatus in a radio communication system.

### [Background Art]

In LTE (Long Term Evolution) and LTE successor systems (e.g., LTE-A (LTE Advanced), NR (New Radio) (also called 5G)), a sidelink (also called D2D (Device to Device) in which communication apparatuses such as UEs communicate directly without using a base station has been studied (Non-Patent Document 1).

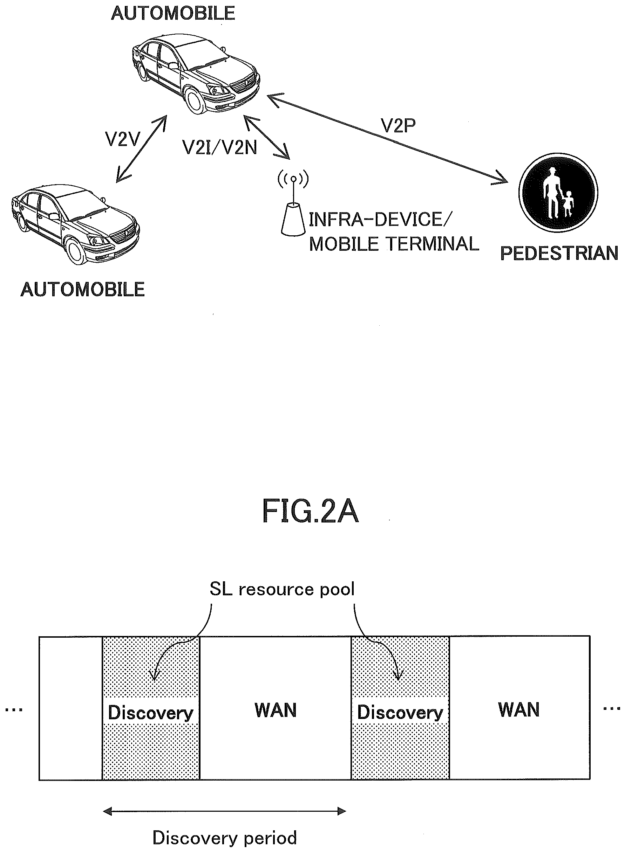

In addition, the realization of V2X (Vehicle to Everything) has been studied, and standardization is under way. Here, V2X is a part of the Intelligent Transport Systems (ITS), and as shown in Fig. 1, it is a generic term for V2V (Vehicle to Vehicle), which means a form of communication between vehicles and roadside aircrafts (RSU: Road-Side Unit), V2N (Vehicle to Nomadic device), which means a form of communication between vehicles and mobile devices of drivers, and V2P (Vehicle to Pedestrian), which means a form of communication between vehicles and mobile devices of pedestrians.

### [Prior Art Document]

### [Non-patent Documents]

[Non-patent Document 1] 3GPP TS 36.213 V14.3.0 (2017-06)

### [Summary of Invention]

### [Problem to be solved by the invention]

With regard to V2X, a technique is being studied in which a plurality of communication apparatuses (e.g., a communication apparatus mounted on a vehicle) are grouped, and communication apparatuses within the group transmit data (e.g., data sensed by a sensor) to a representative communication apparatus by a sidelink, and a representative communication apparatus transmits the aggregated data to a base station. In the art, it is also contemplated that a representative communication apparatus transmits data received from a base station to a communication apparatus within a group. However, in the art, the relationship between the timing of sidelink communication and the timing of communication between the representative communication apparatus and the base station is not clear.

The present invention has been made in view of the foregoing, and is intended to provide a technology that enables the relationship between the timing of sidelink communication and the timing of communication between the representative communication apparatus and the base station to be clarified.

### [Means for Solving Problems]

According to the disclosed technology, there is provided a communication apparatus including:
a reception unit configured to receive assignment information of an uplink resource from a base station; and
a transmission unit configured to transmit, to the base station, by the uplink resource, a signal received by a sidelink resource associated with the uplink resource.

### [Effect of invention]

According to the disclosure technique, a technique is provided that enables a relationship between the timing of sidelink communication and the timing of communication between the representative communication apparatus and the base station to be clarified.

### [Brief Description of the Drawings]

Fig. 1 is a diagram illustrating V2X;
FIG. 2A is a diagram illustrating a sidelink;
FIG. 2B is a diagram illustrating a sidelink;
Fig. 3 is a diagram illustrating a MAC PDU used for sidelink communication;
Fig. 4 is a diagram illustrating the format of the SL-SCH subheader;
Fig. 5 is a diagram illustrating an example of a channel structure used in a sidelink;
Fig. 6 is a diagram illustrating a configuration example of a radio communication system according to an embodiment;
Fig. 7 is a diagram illustrating a resource selection operation of a communication apparatus;
Fig. 8 is a diagram illustrating an operation example in which information is aggregated and transmitted;
Fig. 9 is a diagram illustrating an operation example 1 of Example 1;
Fig. 10 is a diagram illustrating an operation example 2 of Example 1;
Fig. 11 is a diagram illustrating an operation example 3 of Example 1;
Fig. 12 is a diagram illustrating an operation example 4 of Example 1;
FIG. 13A is a diagram illustrating an example when SL and UL are the same slot;
Fig. 13B is a diagram illustrating an example when the SL and the UL are different slots;
Fig. 14A is a diagram illustrating an example when the SL and UL are the same slot;
Fig. 14B is a diagram illustrating an example when the SL and the UL are different slots;
FIG. 15 is a diagram illustrating the need for Gap;
FIG. 16 is a diagram illustrating the need for Gap;
FIG. 17 is a diagram illustrating the need for Gap;
Fig. 18 is a diagram illustrating an operation example of Example 2;
Fig. 19 is a diagram illustrating an operation example of Example 3;
Fig. 20 is a diagram illustrating an operation example of Example 4;
FIG. 21A Example 2; an example when SL and DL are the same slot;
Fig. 21B is a diagram illustrating an example when the SL and the DL are different slots;
Fig. 22 is a diagram illustrating an example of a functional configuration of a base station 10 according to an embodiment;
Fig. 23 is a diagram illustrating an example of a functional configuration of a communication apparatus 20 according to an embodiment;
Fig. 24 is a diagram illustrating an example of a hardware configuration of a base station 10 and a communication apparatus 20 according to an embodiment.

### [Modes for Carrying Out the Invention]

Hereinafter, embodiments of the present invention (this embodiment) will be described with reference to the drawings. It should be noted that the embodiments described below are only one example, and the embodiments to which the present invention is applied are not limited to the following embodiments.

Although the method of direct communication between communication apparatuses in this embodiment is assumed to be a sidelink (SL) of LTE or NR, the method of direct communication is not limited to this method. In addition, the name "sidelink" is an example, and the name "sidelink" may not be used, and UL may include the function of SL.

UL and SL may also be distinguished by differences in one or more of the time resources, frequency resources, time-frequency resources, reference signals referenced to determine Pathloss in transmission power control, or synchronization signals (PSSS/SSSSS) used to synchronize.

For example, in UL, a reference signal of antenna port X is used as a reference signal to determine Pathloss in transmission power control, and in SL (including UL used as SL), a reference signal of antenna port Y is used as a reference signal to determine Pathloss in transmission power control.

Further, although the present embodiment mainly assumes the embodiment in which a communication apparatus is mounted on a vehicle, embodiments of the present invention are not limited to this embodiment. For example, the communication apparatus may be a human-held terminal or a device in which the communication apparatus is loaded or mounted on an aircraft.

### (Outline of Sidelink)

In this embodiment, since the sidelink is the basic technology, an outline of the sidelink will be first described as a basic example. An example of the technique described herein is the technique specified in Rel. 14, etc. of 3GPP. The technique may be used in NR, or in NR, techniques different from the technique may be used.

Sidelink is broadly divided into "discovery" and "communication". "For "discovery," as shown in FIG. 2A, a resource pool for discovery message is allocated for each discovery period, and the communication apparatus (called a UE) transmits a discovery message (discovery signal) within its resource pool. More specifically, there are Type1 and Type2b. In Type 1, the communication apparatus selects a transmission resource from the resource pool autonomously. In Type 2b, semi-static resources are assigned by higher-layer signaling (e.g., RRC signals).

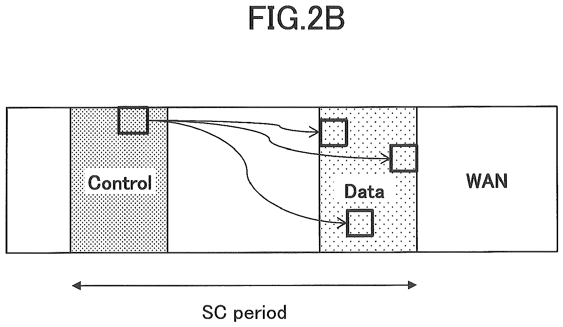

As shown in Fig. 2B, for "communication," a resource pool for SCI (Sidelink Control Information)/data transmission is periodically allocated. A communication apparatus in a transmission side notifies the receiving side of data transmission resources (PSSCH resource pool) and the like by SCI using the resource selected from the control resource pool (PSCCH resource pool) and transmits data using resources for data transmission. For "communication," more specifically, there are modes 1 and 2. In mode 1, resources are dynamically allocated by (E)PDCCH sent from the base station to the communication apparatus. In mode 2, the communication apparatus selects the transmission resource autonomously from the resource pool. Resource pools are notified by a SIB or are predefined.

In addition, in Rel-14, there are modes 3 and 4 in addition to modes 1 and 2. In Rel-14, SCI and data can be transmitted simultaneously (e.g., in one subframe) in resource blocks adjacent in a frequency direction. SCI may be referred to as SA (scheduling assignment).

The channel used for "Discovery" is called PSDCH (Physical Sidelink Discovery Channel), and the channel for transmitting control information such as SCI in "Communication" is called PSCCH (Physical Sidelink Control Channel), and the channel for transmitting data is called PSSCH (Physical Sidelink Shared Channel). PSCCH and PSSCH have a PUSCH-based structure with DMRS (Demodulation Reference Signal) inserted.

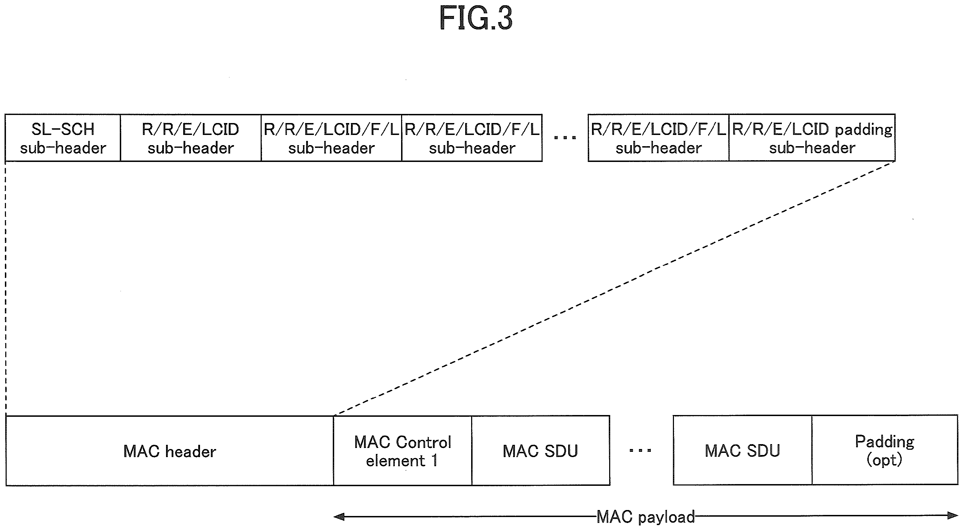

The MAC (Medium Access Control) PDU (Protocol Data Unit) used for sidelink is composed of at least MAC header, MAC control element, MAC SDU (Service Data Unit), and padding, as shown in FIG. 3. The MAC PDU may contain other information. The MAC header consists of one SL-SCH (Sidelink Shared Channel) subheader and one or more MAC PDU subheaders.

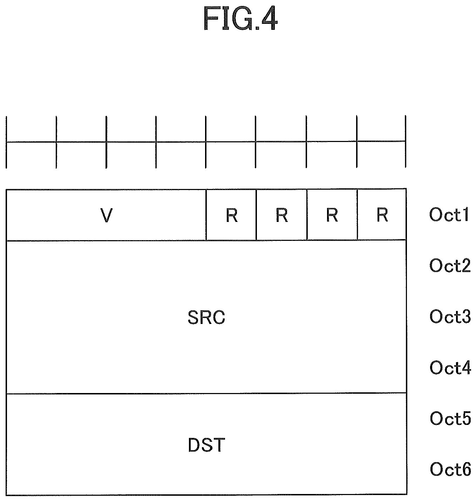

As shown in Fig. 4, the SL-SCH subheader consists of MAC PDU format version (V), transmission source information (SRC), destination information (DST), and Reserved bit(R), etc. V is assigned to the beginning of the SL-SCH subheader and indicates the MAC PDU format version used by the communication apparatus. In the transmission source information, information of transmission source is set. As the transmission source information, an identifier related to ProSe UE ID may be set. As transmission destination information, information on ProSe Layer-2 Group ID of transmission destination may be set.

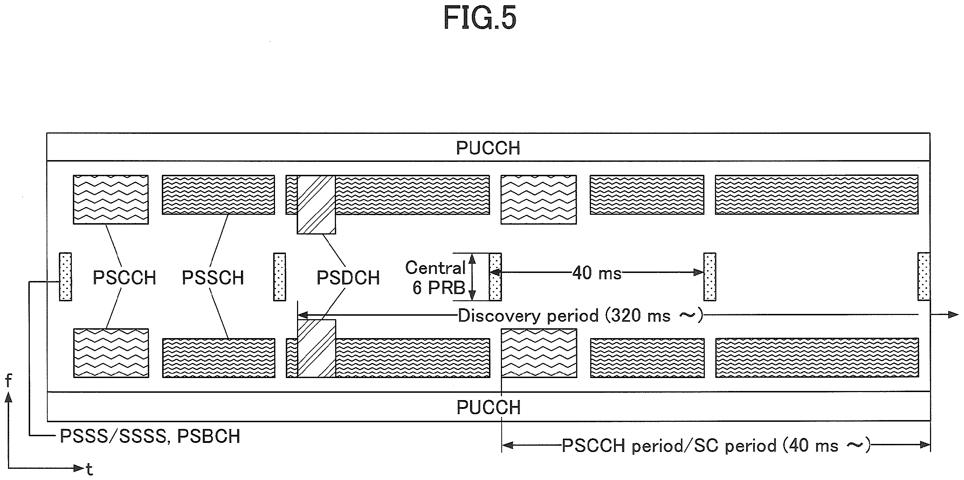

An example of a sidelink channel structure is shown in Fig. 5. As shown in FIG. 5, the PSCCH resource pool and the PSSCH resource pool used for "communication" are assigned. In addition, the PSDCH resource pool used for "discovery" is assigned at a period longer than the period of the "communication" channel.

In addition, PSSS (Primary Sidelink Synchronization Signal) and SSSS (Secondary Sidelink Synchronization Signal) are used as synchronization signals for sidelink. For example, a PSBCH (Physical Sidelink Broadcast Channel) that transmits broadcast information (broadcast information) such as system bandwidth, frame number, and resource configuration information of a sidelink is used for out-of-coverage operations. PSSS/SSSS and PSBCH are transmitted, for example, in one subframe. PSSS/SSSS may be referred to as SSLSS.

The V2X assumed in this embodiment is a scheme for "communication". However, in this embodiment, there may be no distinction between "communication" and "discovery". Also, the techniques of this embodiment may be applied in "discovery."

### (System Configuration)

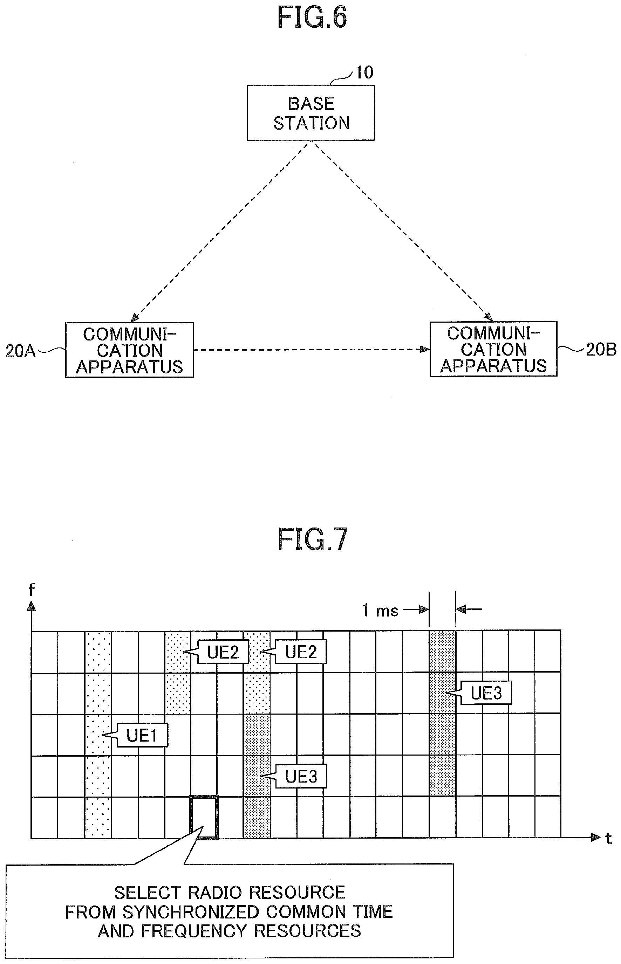

Fig. 6 is a diagram illustrating a configuration example of a radio communication system according to the present embodiment. As shown in FIG. 6, the radio communication system according to this embodiment includes a base station 10, a communication apparatus 20A, and a communication apparatus 20B. Although there are actually many communication apparatuses, Fig. 6 illustrates the communication apparatus 20A and the communication apparatus 20B as examples.

In FIG. 6, although the communication apparatus 20A and the communication apparatus 20B are intended to be the transmitting side and the receiving side, both the communication apparatus 20A and the communication apparatus 20B have both transmitting and receiving functions. Hereinafter, when the communication apparatuses 20A, 20B, etc. are not particularly distinguished, they are simply described as "communication apparatus 20" or "communication apparatus." In FIG. 6, although both communication apparatus 20A and communication apparatus 20B are shown in coverage as an example, operation in this embodiment is applicable even when some communication apparatus 20 is in coverage and the other communication apparatus 20 is out of coverage.

In this embodiment, the communication apparatus 20 is a device mounted on a vehicle, such as a car, and has a cellular communication function as a UE in an LTE or NR and a sidelink function. Further, the communication apparatus 20 includes a function for acquiring report information (position, event information, etc.) such as a GPS device, a camera, various sensors, etc. The communication apparatus 20 may also be a general portable terminal (e.g., a smartphone). The communication apparatus 20 may also be an RSU. The RSU may be a UE-type RSU with the function of the UE or may be a gNB-type RSU with the function of the base station.

Note herein that the communication apparatus 20 does not need to be an apparatus of one housing. For example, even if various sensors are distributed in a vehicle, the apparatus including the various sensors is the communication apparatus 20. The communication apparatus 20 may not include the various sensors and may include a function for transmitting and receiving data with various sensors.

In addition, the processing content of the sidelink transmission of the communication apparatus 20 is basically the same as that of the UL transmission processing in LTE or NR. For example, the communication apparatus 20 scrambles codeword of transmission data, modulates it to generate a complex-valued symbols, maps the complex-valued symbols to one or two layers, and performs precoding. The precoded complex-valued symbol is then mapped to the resource element to generate a transmission signal (e.g., complex-valued time-domain SC-FDMA signal) and transmits it from each antenna port.

In addition, the base station 10 has a function of cellular communication as a base station 10 in the LTE or NR and a function for enabling communication of the communication apparatus 20 in the present embodiment (e.g., resource pool configuration, resource allocation, etc.). The base station 10 may also be a RSU (gNB type RSU).

In the radio communication system according to the present embodiment, the signal waveform used by the communication apparatus 20 for SL or UL may be OFDMA, SC-FDMA, or other signal waveform. In the radio communication system according to the present embodiment, as an example, a frame comprising a plurality of subframes (e.g., 10 subframes) is formed in the time direction, and the frequency direction is comprised of a plurality of subcarriers. The length of the slot and the number of slots per subframe may also be determined depending on subcarrier spacing. The number of symbols per slot may also be 14.

In this embodiment, the communication apparatus 20 may take any mode in which the resource for transmitting an SL signal is autonomously selected from the resource pool (hereinafter referred to as mode 4), or in which the resource for transmitting an SL signal is dynamically allocated from the base station 10 (hereinafter referred to as mode 3). The mode is set, for example, from the base station 10 to the communication apparatus 20.

As shown in FIG. 7, the communication apparatus of mode 4 (shown as a UE in FIG. 7) selects a radio resource from a synchronized common time-frequency grid. For example, communication apparatus 20 senses in the background to identify as candidate resources that are good resources of sensing results and not reserved for other communication apparatuses and selects the resources to be used to transmit from candidate resources.

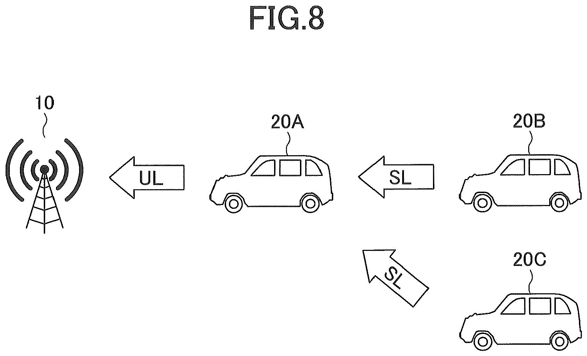

As an example of communication using V2X, as illustrated in Fig. 8, a technique is studied in which a plurality of communication apparatuses 20 (communication apparatuses 20A to 20C in Fig. 8) are grouped together, and the communication apparatuses 20B and 20C in the group transmit data (e.g., data sensed by the sensor) to the communication apparatus 20A representing the group by SL, and the representative communication apparatus 20A transmits data aggregated by the representative communication apparatus 20A to the base station 10 in UL. In addition, the representative communication apparatus 20A may transmit data received from the base station 10 to the communication apparatuses 20B and 20C.

### (Problem)

In realizing the communication described above, it is contemplated that a SL resource and an UL resource (DL resources) may be independently allocated to the communication apparatus 20 using existing technology. However, when the SL resource and the UL resource are independently assigned to the communication apparatus 20, the timing when the representative communication apparatus 20 transmits data received from another communication apparatus 20 in the group in UL is not clear.

Further, when a SL resource and a DL resource are independently allocated to the communication apparatus 20, it is not clear when the representative communication apparatus 20 transmits data received from the base station 10 in SL. In other words, there is a problem that the relationship between the timing of sidelink communication and the timing of communication between the representative communication apparatus and the base station is not clear.

If the relationship between the timing of sidelink communication and the timing of communication between the representative communication apparatus and the base station is not clear, for example, the representative communication apparatus 20 may allow certain time to transmit received data from another communication apparatus 20 in the group at UL. If the representative communication apparatus 20 takes a long time to transmit data received from another communication apparatus 20 in the group at UL, the serviceability may be reduced.

Hereinafter, an exemplary embodiment of a technique for solving the above-described problems will be described. Although Examples 1 to 4 will be described below, Examples 1 to 4 may be performed independently, or any two, any three, or all of them may be combined.

In the following Examples 1 to 4, it is assumed that a group of a plurality of communication apparatuses and a representative communication apparatus within the group have already been determined. The group of communication apparatuses and the representative communication apparatus in the group may be configured beforehand by RRC signaling or the like, or the base station 10 or the communication apparatus 20 itself may determine a group of communication apparatuses and a representative communication apparatus in the group based on the received quality of the reference signal or the like.

Note that, there may be no representative communication apparatus in the group. That is, in the communication apparatus, there may be no distinction between the representative communication apparatus and the non-representative communication apparatus. In this case, for example, the allocation of UL resources to one or more communication apparatuses in the group and the allocation of SL resources to the entire communication apparatuses in the group are performed at the same time.

In the description of the following examples, unless otherwise stated, what is transmitted and received is described as a "signal". The "signal" is, for example, data, control information, or data + control information.

### (Example 1)

First, Example 1 will be described. In Example 1, a group is assigned a SL resource and an UL resource associated with the SL resource. It may be stated that an UL resource and a SL resource associated with the UL resource are allocated. It may also state that "the SL resource and the UL resource related with the SL resource are assigned", "the UL resource and the SL resource related with the UL resource are assigned". In cases where there is no representative communication apparatus, it may be possible that the SL resource and the UL resource are not associated with each other. In this case, for example, in the PHY layer, the SL resource is not associated with the UL resource, but in the upper layer, control may be performed to link SL transmission and UL transmission (in Example 4, DL reception and SL transmission). Considering that "SL resource and UL resource are associated with each other" in a broader way, controlling in the upper layer to associate SL transmission with UL transmission (DL reception and SL transmission in Example 4) may be included in "SL resource and UL resource are associated with each other".

This will clarify the timing of UL transmission for SL transmission, and can shorten the time required for the representative communication apparatus 20 to transmit data received from another communication apparatus 20 in the group at UL, for example.

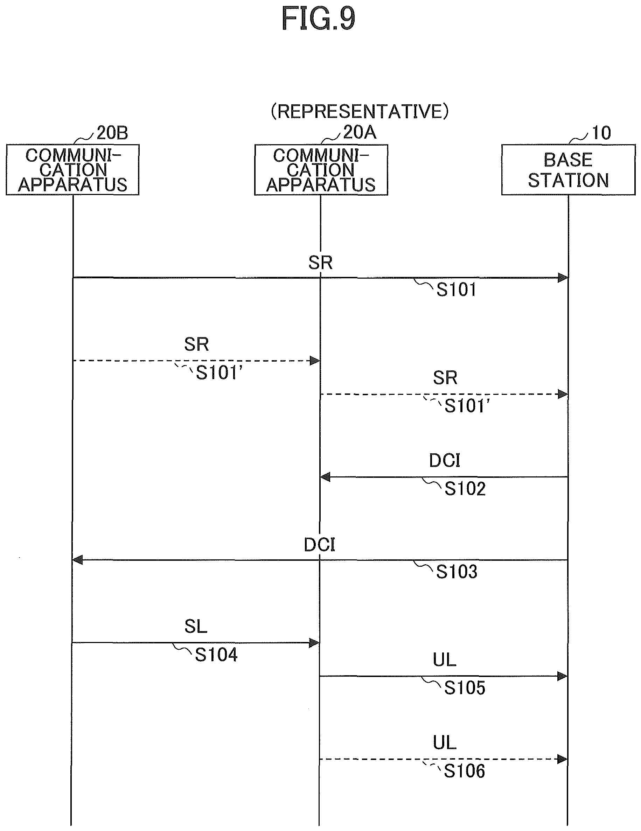

Referring to Fig. 9, an operation example 1 of the first embodiment will be described. The first example of operation shown in FIG. 9 is an example in which the SL resources used by the communication apparatus 20 are dynamically allocated from the base station 10 together with the UL resources.

In the example shown in FIG. 9, the communication apparatus 20A and the communication apparatus 20B form one group. Note that, although more communication apparatuses may form a group, in FIG. 9, two communication apparatuses belonging to the group are shown for ease of understanding the operation.

A representative communication apparatus is the communication apparatus 20A. Hereinafter, it is described as "communication apparatus 20A (representative)" so that it can be seen that the communication apparatus 20A is representative.

In the example illustrated in FIG. 9, for example, a signal (e.g., control information, data, or control information + data) to be transmitted by SL in the communication apparatus 20B is generated. In S101, the communication apparatus 20B transmits SR (Scheduling Request) to the base station 10.

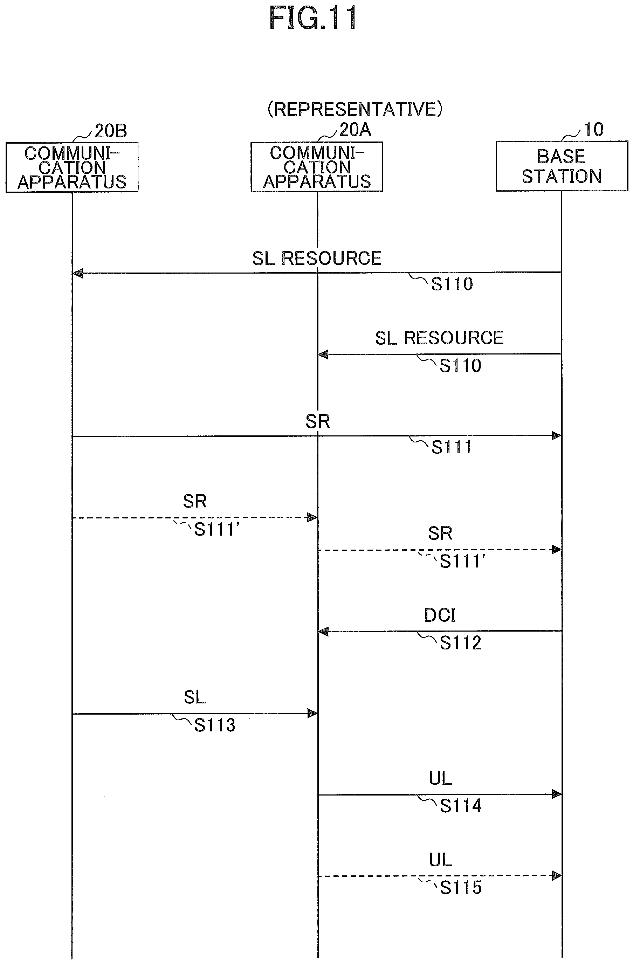

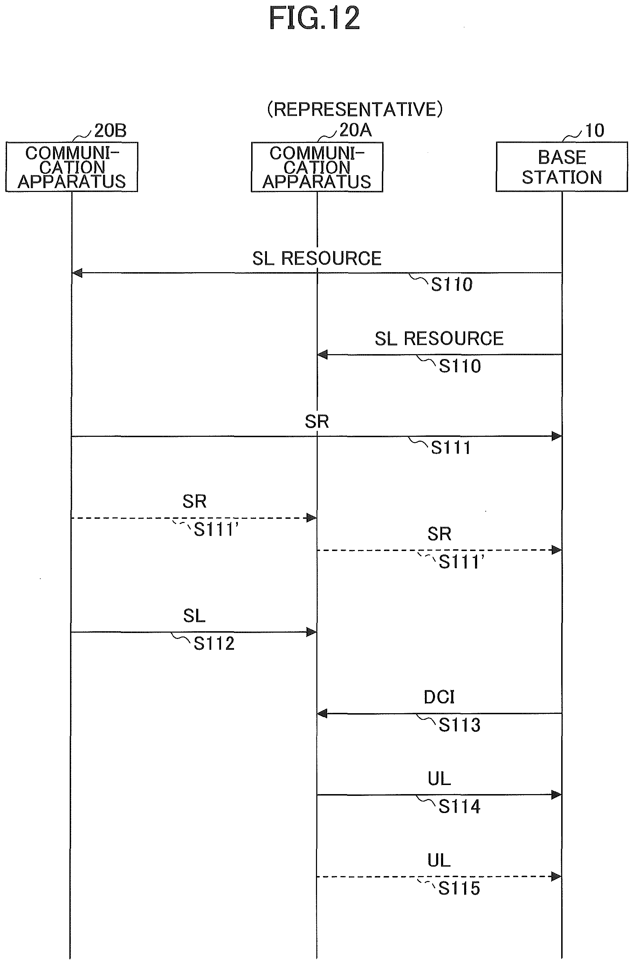

Instead of transmitting the SR to the base station 10 as described above, the communication apparatus 20B may transmit the SR to the communication apparatus 20A (representative) by SL, and the communication apparatus 20A (representative) that received the SR may transmit the SR to the base station 10, as shown by the dotted line in S101'. With regard to S101', the SR transmitted by the communication apparatus 20A (representative) may also include SR for other communication apparatus within the group or data to be transmitted by the communication apparatus 20A (representative), thus, the SR transmitted by the communication apparatus 20A (representative) may not be the same as the SR received from the communication apparatus 20B. This point is also true for S101' in Fig. 100, S111' in FIG. 11 and S111' in FIG. 12.

The communication apparatus 20B may transmit a BSR (Buffer Status Report) to the base station 10 or the communication apparatus 20A (representative) together with the SR or instead of the SR. In addition, it is not mandatory to send and receive SR/BSR as in S101(S101') before performing operation of S102 or later.

In S102 and S103, the base station 10 transmits DCI (downlink control information) by a PDCCH. The DCI transmitted in S102 and S103 is, for example, one DCI which the communication apparatuses 20 (in the example of Fig. 9, the communication apparatus 20A (representative) and the communication apparatus 20B) within the group can decode by using a group common RNTI (or a RNTI of the communication apparatus 20A (representative) that is held by both of the communication apparatus 20A (representative) and the communication apparatus 20B). The DCI includes, for example, information about SL resources allocated to the communication apparatus 20B and information about UL resources allocated to the communication apparatus 20A (representative). The UL resource is the resource associated with the SL resource. The information of allocated resources included in the DCI may be referred to as scheduling information. The scheduling information may also include information about the allocated resources and other information (e.g., data modulation methods, retransmissions, new transmissions). The SL resource allocation information may include resource allocation information for SL transmission and resource allocation information for SL reception. Also, for example, if the name "sidelink" is not used and the UL includes the function of SL, then some or all of the UL resources allocated from the base station 10 may be resources for use in SL.

In this case, the communication apparatus 20B that receives the DCI performs SL transmission using the SL resource specified by the DCI (S104). In addition, the communication apparatus 20A (representative) that receives the DCI executes SL reception using the SL resource specified by the DCI (S104). In addition, the communication apparatus 20A (representative) that receives the DCI transmits the signal received by the SL resource to the base station 10 using the UL resource specified by the DCI (S105).

When only a part of the signal received by SL in S104 cannot be transmitted by a single UL transmission in the S105, the communication apparatus 20A (representative) may further request the base station 10 to assign an UL resource by SR or BSR and transmit the remaining signal to the base station 10 (S106).

In S102 and S103, the base station 10 may transmit a DCI (referred to as a DCI-SL for convenience) which the communication apparatuses 20 (the communication apparatus 20A and the communication apparatus 20B in the example of Fig. 9) within the group can commonly decode by using a group common RNTI, and a DCI (referred to as a DCI-UL for convenience) that can be decoded by an individual RNTI (RNTI of the communication apparatus 20A (representative)). In this example, the DCI-SL includes information about SL resources assigned to SL transmission of the communication apparatus 20B. The DCI-UL also includes information about UL resources assigned to UL transmission of the communication apparatus 20A (representative).

In FIG. 9, since it is not necessary to receive allocation information of the UL resources of the DCI for the communication apparatus 20B, the step number (S102) of the DCI transmission from the base station 10 to the communication apparatus 20A (representative) and the step number (S103) of the DCI transmission from the base station 10 to the communication apparatus 20B are made different. However, the communication apparatus 20B may determine the SL resource position by receiving the allocation information of the UL resource of the DCI. For example, the communication apparatus 20B may regard a location obtained by excluding the portion allocated to the UL from the resources (time-frequency resources) of the relevant slot except for PDCCH as a resource for SL. Alternatively, both the communication apparatus 20A (representative) and the communication apparatus 20B may receive the allocation information of UL resources and the allocation information of SL resources. In these cases, S102 and S103 are common. That is, for example, S103 of FIG. 9 may be read as S102. The DCI transmitted in S102 includes, for example, schedule information for UL only or both UL and SL.

In this case, the communication apparatus 20B performs SL transmission using the SL resource specified by the DCI-SL (S104). The communication apparatus 20A (representative) executes SL reception using the SL resource specified by the DCI-SL (S104). Furthermore, the communication apparatus 20A (representative) transmits data received by the SL resource to the base station 10 using the UL resource specified by the DCI-UL (S105).

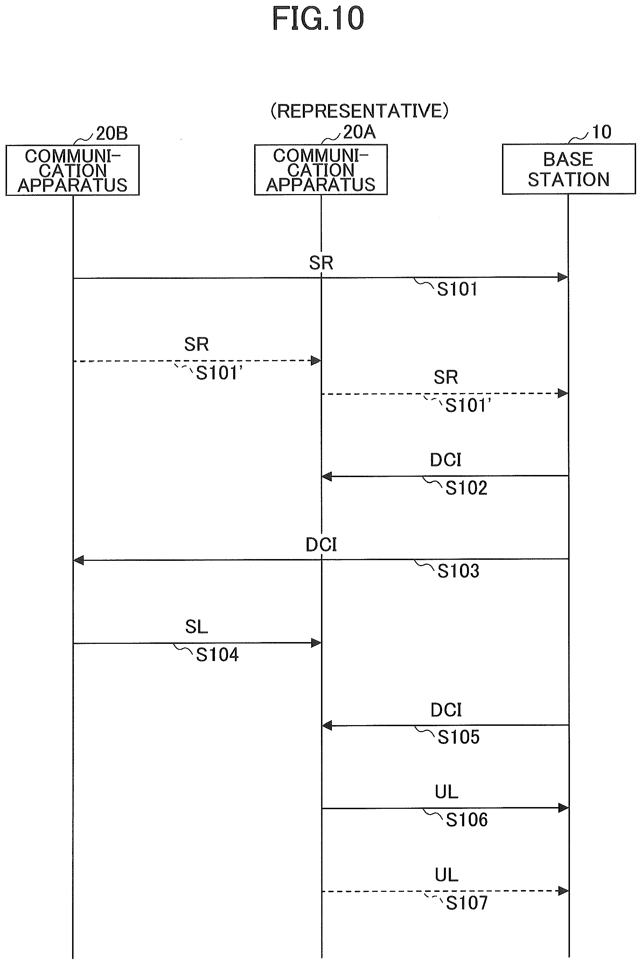

Fig. 10 shows an operation example 2 of Example 1. A portion different from FIG. 9 will be described. In the example illustrated in FIG. 10, in S102 and S103, the base station 10 transmits a DCI-SL, and the communication apparatus 20B and the communication apparatus 20A (representative) receive the DCI-SL and grasp the SL resource. In S104, the communication apparatus 20B performs SL transmission using the SL resource, and the communication apparatus 20A (representative) performs SL reception using the SL resource.

In S105, the base station 10 transmits a DCI-UL, and the communication apparatus 20A (representative) receives the DCI-UL and grasps the UL resource. In S106, the communication apparatus 20A (representative) transmits a signal to the base station 10 using the UL resource.

Fig. 11 shows an operation example 3 of Example 1. The operation example 3 shown in Fig. 11 is an example in which the SL resource (or resource pool) used by the communication apparatus 20 is configured to the communication apparatus 20 by upper-layer signaling (e.g., MAC signaling, RRC signaling) from the base station 10.

Similar to the operation example 1, in the operation example 3 illustrated in Fig. 11, the communication apparatus 20A and the communication apparatus 20B form one group. Although more communication apparatuses can form a group, in FIG. 11, two communication apparatuses belonging to the group are shown for ease of understanding operation. A representative communication apparatus is a communication apparatus 20A.

In S110, SL resources are configured to each communication apparatus 20 from the base station 10. The information of the configured SL resource may be included in broadcast system information, may be included in a synchronization signal or SSB, or may be included in a group common RRC message, communication apparatus-specific RRC message or the like.

The configured SL resource may be a resource that the communication apparatus 20 actually uses for SL transmission, or may be a resource pool. If the configured SL resource is a resource pool, the communication apparatus 20 selects, for example, a small-interference SL resource from the resource pool and uses it for SL transmission.

The configured SL resources may also be a set of candidates of resources used by the communication apparatus 20 for SL transmission. In this case, for example, the communication apparatus 20A (representative) may select a SL resource to be used in the communication apparatus 20B from the set of candidates for resources, and notify the communication apparatus 20B of the selected SL resource (index of resources, etc.) using SL control information (SCI).

For example, it is assumed that a signal (e.g., control information, data, or control information + data) to be transmitted by SL is generated in the communication apparatus 20B. In S111, the communication apparatus 20B transmits a SR (or BSR) to the base station 10.

Instead of transmitting the SR to the base station 10 as described above, the communication apparatus 20B may transmit the SR to the communication apparatus 20A (representative) by SL, and the communication apparatus 20A (representative) that received the SR may transmit the SR to the base station 10, as shown by the dotted line in S111'. It is not mandatory to transmit and receive SR/BSR as in S111(S111') before the operation of S112 or later.

In S112, the base station 10 transmits a DCI (downlink control information) by PDCCH. The DCI transmitted in S112 is a DCI that can be decoded, for example, by using an individual RNTI (here, the RNTI of the communication apparatus 20A (representative)). The DCI includes, for example, information about UL resources assigned to the communication apparatus 20A (representative). The UL resource is a resource associated with the SL resource.

In S113, the communication apparatus 20B performs SL transmission using the SL resource set in S110. The communication apparatus 20A (representative) performs SL reception using the SL resource set in S110.

In S114, the communication apparatus 20A (representative) transmits a signal received by the SL resource to the base station 10 using the UL resource specified by the DCI.

When only a part of the signal received by SL in the S113 can be transmitted by a single UL transmission in the S114, he communication apparatus 20A (representative) may further request the base station 10 for a UL resource by SR or BSR and transmit the remaining signal to the base station 10 (S115).

Fig. 12 shows an operation example 4 of Example 1. A portion different from FIG. 11 will be described. In the example shown in FIG. 12, in S112, the communication apparatus 20B performs SL transmission using the SL resource set in S110, and the communication apparatus 20A (representative) performs SL reception using the SL resource.

In S113, the base station 10 transmits a DCI, and the communication apparatus 20A (representative) receives the DCI and grasps the UL resource. In S114, the communication apparatus 20A (representative) uses the UL resource to transmit signals received at S112 to the base station 10.

In Example 1, the SL resources allocated to communication apparatuses 20 of a group by the base stations 10 may overlap with SL resources allocated to other groups.

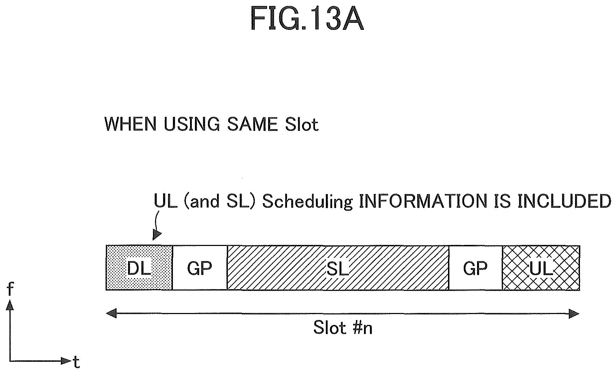

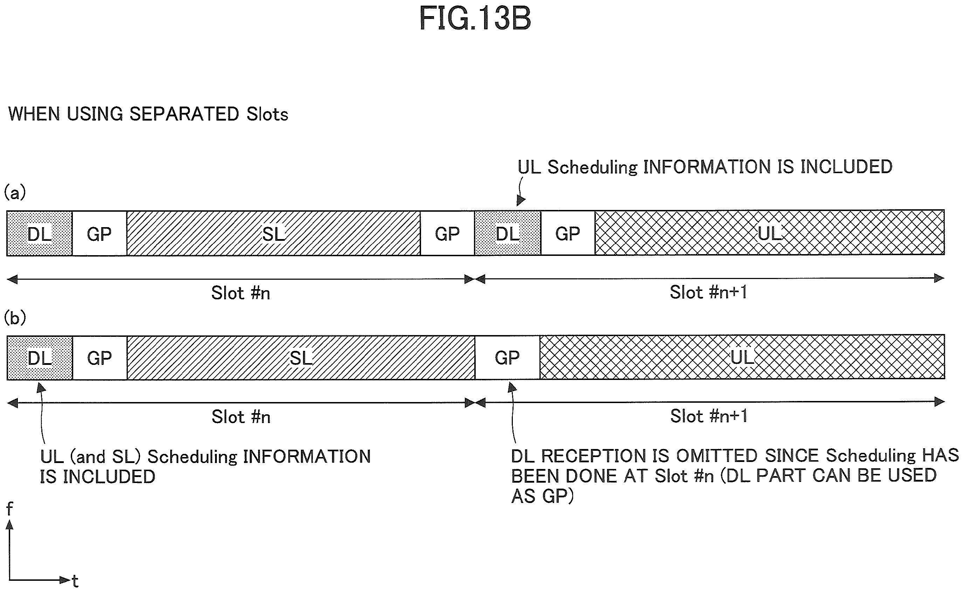

FIGS. 13A and 13B are diagrams illustrating an example of the allocation of SL and UL resources. FIGS. 13A and 13B (and similar figures thereafter) are diagrams focusing on a time direction (transverse), and the frequency direction (longitudinal) length of each slot may be any one. In FIGS. 13A and 13B (and similar figures thereafter), a "slot" is used as a time unit for transmission and reception (which may be referred to as a transmission time interval (TTI)), but this is only an example. "Subframe" may be used instead of "slot". Time units other than "slots" and "subframes" may also be used (which may be referred to as time intervals).

The length of time of each slot may be dependent upon the subcarrier spacing. In addition, the configuration of each slot (the symbol position and symbol length of the DL region, the symbol position and symbol length of the Gap region, the symbol position and symbol length of the SL region, the symbol position and symbol length of the UL region, etc.) may be preconfigured by RRC signaling or the like for each communication apparatus 20, or may be dynamically configured by DCI or the like.

In FIGS. 13A, 13B (and similar figures thereafter), the region denoted by "DL" represents a resource (in particular one or more symbols) that can be used for DL. The resource actually used for DL communication may be a portion of the resource in the area denoted by "DL", or it may be a whole resource. Similarly, the area denoted by "SL" denotes a resource that can be used for SL. The resource actually used for SL communication (allocated or selected) may be a part of the resource in the area denoted by "SL", or may be all of the resources. Similarly, the area denoted by "UL" indicates resources that can be used for UL. The resource actually used for UL communication may be a part of the resource in the area indicated by "UL", or it may be a whole resource.

Fig. 13A illustrates an example when SL and UL resources are assigned to the same slot. As shown in FIG. 13A, the slot includes DL, SL, and UL regions in order of time. It also has a Gap between the DL region and the SL region for switching DL and SL, and a Gap between the SL region and the UL region for switching SL and UL. As will be described later, the Gap may be omitted. As shown in FIG. 13A, it is preferred that the SL and UL are continuous (with the Gap sandwiched) to minimize the delay. However, SL and UL may be discontinuous. In the present specification and claims, "two slots or two regions are continuous" includes both the case where they continue via a Gap and the case where they continue without a Gap.

In the example shown in FIG. 13A, for example, in S102 of FIG. 9, the communication apparatus 20A (representative) receives a DCI from the base station 10 that includes UL resource information and SL resource information in the DL region shown in FIG. 13A. The communication apparatus 20A (representative) monitors and receives SL signals transmitted from the communication apparatus 20B with SL resources in the SL region specified by the DCI. The communication apparatus 20A (representative) transmits a signal received from the communication apparatus 20B with UL resources in the UL area specified by the DCI.

In the example shown in FIG. 13A, for example, in S103 of FIG. 9, the communication apparatus 20B receives a DCI from the base station 10 that includes UL resource information and SL resource information in the DL region shown in FIG. 13A. The communication apparatus 20B transmits the signal of SL with the SL resource in the SL region specified by the DCI.

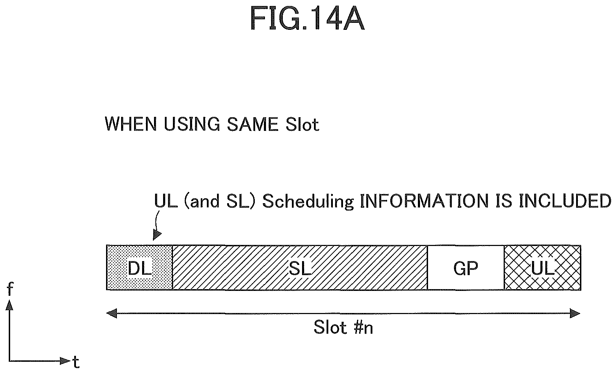

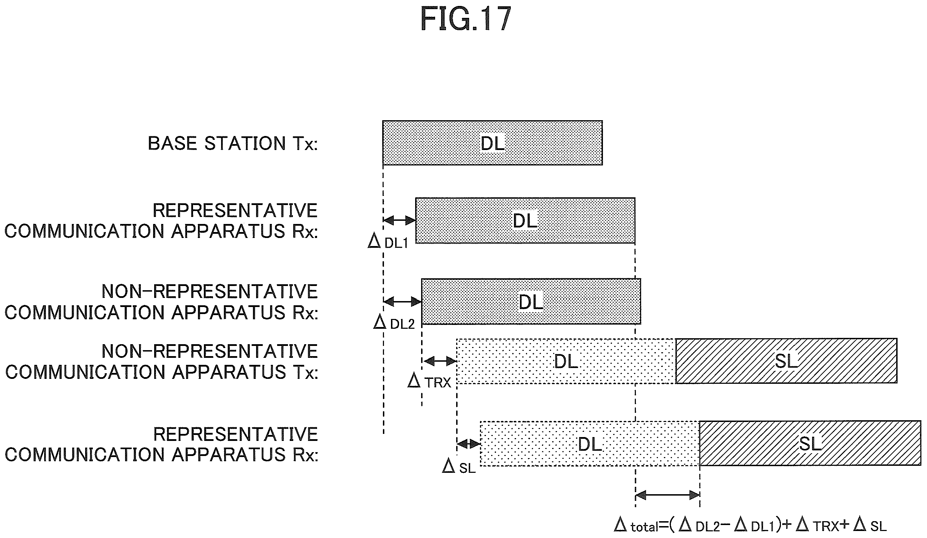

As illustrated in the example illustrated in FIG. 11, when the SL resource is configured by the upper-layer signaling, the communication apparatus 20B does not need to receive DCI by the DL, so that switching from DL reception to SL transmission can be eliminated. In this case, the Gap between the DL and the SL may not be provided, as shown in FIG. 14A. In addition, even when DL reception is performed, it may be possible to eliminate the need for Gap, as will be described later in Fig. 17.

In the case of FIG. 14A, for example, the communication apparatus 20B transmits a SL signal using n SL resource in the SL region configured by the upper-layer signaling, and the communication apparatus 20A (representative) receives the signal with the SL resource.

Fig. 13B illustrates an example when SL and UL resources are assigned to separate slots. The slot to which the SL resource is allocated and the slot to which the UL resource is allocated are continuous. From the viewpoint of minimizing the delay of SL reception to UL transmission, it is preferable that the slots to which SL resources are assigned and the slots to which UL resources are assigned are continuous. However, slots to which SL resources are allocated and slots to which UL resources are allocated may be discontinuous.

In the example shown in Fig. 13B(a), allocation information of a SL resource is transmitted by a DL resource in a DL region of the slot to which the SL resource is allocated, and allocation information of an UL resource is transmitted by a DL resource in a DL region of the slot to which the UL resource is allocated.

As shown in Fig. 13B(a), the slot #n to which the SL resource is allocated includes DL, SL, and UL regions in the order of time. It also has a Gap between the DL region and the SL region for switching DL and SL, and a Gap between the SL region and the DL region of the adjacent slot for switching SL and DL. The slot #n+1 to which UL resources are assigned includes the DL region and the UL region in the order of time. It also has a Gap between the DL region and the UL region for switching the DL and UL.

In the example shown in Fig. 13B(a), for example, in S102 of Fig. 10, the communication apparatus 20A (representative) receives a DCI including SL resource information from the base station 10 with the DL resource in the DL region of the slot #n shown in Fig. 13B(a). The communication apparatus 20A (representative) monitors and receives SL signals transmitted from the communication apparatus 20B with SL resources in the SL region specified by the DCI. The communication apparatus 20A (representative) receives a DCI including UL resource information from the base station 10 in the S105 of Fig. 10 with the DL resource in the DL region of the slot #n+1 shown in Fig. 13B(a). The communication apparatus 20A (representative) transmits a signal received from the communication apparatus 20B with UL resources in the UL region specified by the DCI.

In the example shown in Fig. 13B(a), for example, in S103 of Fig. 10, the communication apparatus 20B receives a DCI including SL resource information from the base station 10 with the DL resource in the DL region of the slot #n shown in Fig. 13B(a). The communication apparatus 20B transmits SL data using SL resources in the SL region specified by the DCI.

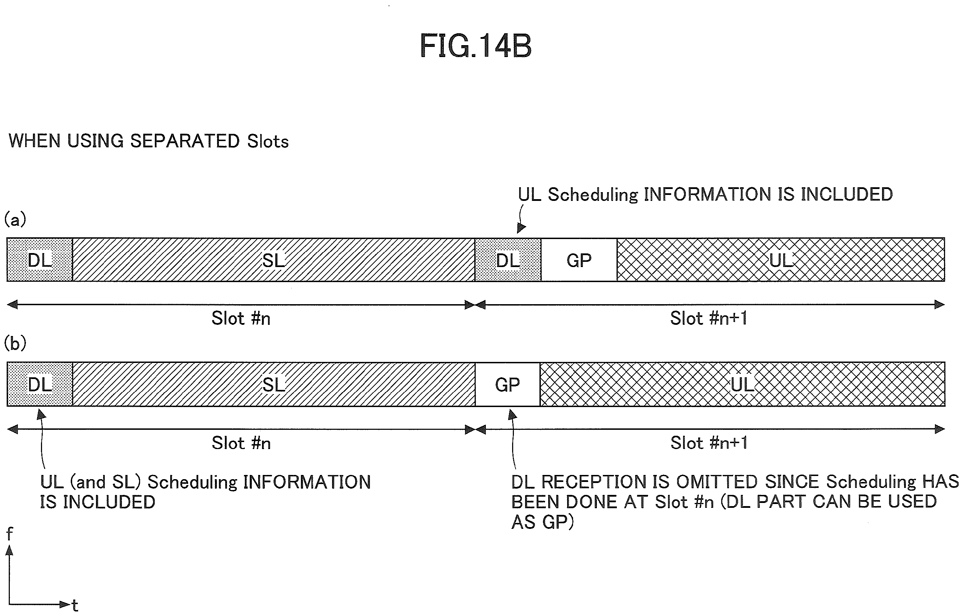

As illustrated in the example illustrated in FIG. 12, when the SL resource is configured by the upper-layer signaling, the communication apparatus 20B does not need to receive DCI by the DL, so that switching from DL reception to SL transmission can be eliminated. In this case, as shown in Fig. 14B(a), the Gap between the DL and the SL may not be provided. In this case, for example, the communication apparatus 20B transmits the signal of SL using the SL resource in the SL region configured by the upper-layer signaling, and the communication apparatus 20A (representative) receives the signal by the SL resource.

Fig. 13B(b) shows an example in which the SL resource allocation information and the UL resource allocation information are transmitted by the DL resource in the DL region of the slot to which the SL resource is allocated.

As shown in Fig. 13B(b), the slot #n to which the SL resource is allocated includes the DL region and the SL region in the order of time. It also has a Gap between the DL region and the SL region for switching DL and SL, and a Gap between the SL region and the DL region of the adjacent slot for switching SL and UL. In addition, slot #n+1 to which UL resources are allocated contains UL region. Also, there is a Gap for switching SL and UL between the SL region of slot #n and the UL region of slot #n+1. The Gap may be a DL region of slot #n+1 in FIG. 13B(a). That is, when DL reception is not performed in the DL region in the configuration of Fig. 13B(a), this corresponds to Fig. 13B(b).

In the example shown in Fig. 13B(b), for example, in S102 of Fig. 9, the communication apparatus 20A (representative) receives a DCI from the base station 10 that includes information of the UL resource and the information of the SL resource in the DL region shown in Fig. 13B(b). The communication apparatus 20A (representative) monitors and receives SL signals transmitted from the communication apparatus 20B with SL resources in the SL region specified by the DCI. The communication apparatus 20A (representative) transmits a signal received from the communication apparatus 20B with UL resources in the UL region specified by the DCI.

In the example shown in Fig. 13B(b), for example, in S103 of Fig. 9, the communication apparatus 20B receives a DCI from the base station 10 including information of the UL resource and information of the SL resource with the DL resource in the DL region shown in Fig. 13B(b). The communication apparatus 20B transmits a signal of SL with the SL resource in the SL region specified by the DCI.

As illustrated in the example illustrated in FIG. 11, when the SL resource is configured by the upper-layer signaling, the communication apparatus 20B does not need to receive DCI by the DL, so that switching from DL reception to SL transmission can be eliminated. In this case, as shown in Fig. 14B(b), the Gap between the DL and the SL may not be provided. In this case, for example, the communication apparatus 20B transmits the signal of SL using the SL resource in the SL region configured by the upper-layer signaling, and the communication apparatus 20A (representative) receives the signal by the SL resource.

In Example 1 (as well as Example 4), the Gap length may be determined based on UE capability (the capability of the communication apparatus 20). Gap may be omitted if switching between sending and receiving is performed for a time sufficiently short compared to Symbol length.

The operation described in Example 1 clarifies the timing of transmitting a signal at UL by the representative communication apparatus 20 that received the signal by SL. In addition, it is possible to minimize the time required for UL transmission from SL reception.

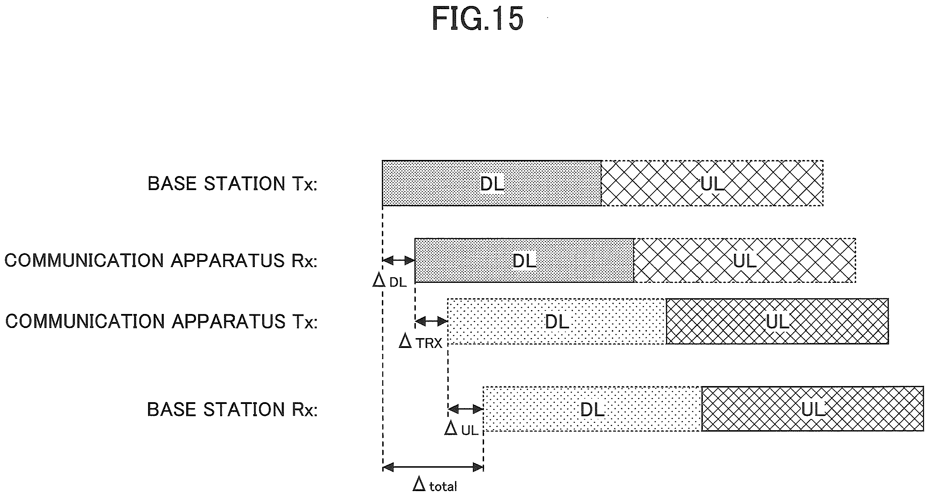

Here, an example of the need for Gap will be described with reference to Figs. 15 to 17. Assume that, as to each box of square showing the DL, UL, and SL regions in Figures 15-17, lateral direction indicates time, and each box has the same lateral length. Each box represents, for example, one slot.

The example of Fig. 15 illustrates the case where the transmission timing of the communication apparatus 20 is not adjusted by the base station 10. As shown in FIG. 15, a signal transmitted by the base station 10 in DL is received by the communication apparatus 20 after a certain time (ΔDL). The communication apparatus 20 transmits a signal in UL after the switching time (ΔTRX) from reception to transmission. The base station 10 receives the UL signal after a certain time (ΔUL). Therefore, as the timing of the slot (or frame), Δtotal shown in the figure is displaced.

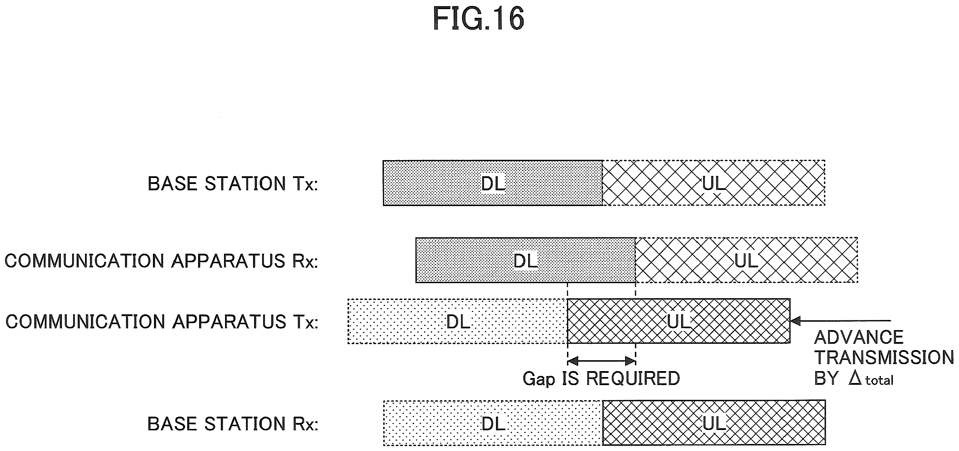

The example of Fig. 16 illustrates the case where the transmission timing of the communication apparatus 20 is adjusted by the base station 10. In this case, as an example, the base station 10 performs adjustment for the communication apparatus 20 so that the transmission timing is forwarded by Δtotal.

As shown in FIG. 16, a signal transmitted by the base station 10 in DL is received by the communication apparatus 20 after a certain time (ΔDL). The communication apparatus 20 forwards the transmission timing by Δtotal with respect to the reception timing and performs UL transmission. However, since the transmission timing is forwarded by Δtotal, overlapping with DL reception occurs. Thus, the overlap portion is set to Gap, thereby avoiding overlapping of UL transmission and DL reception.

The example of Fig. 17 shows an example of DL reception from the base station 10 and SL transmission and reception. As shown in FIG. 17, a signal (e.g., DCI) transmitted by the base station 10 in DL is received by the representative communication apparatus 20 after a certain time (ΔDL1). The DCI is also received by the non-representative communication apparatus 20 after a certain time (ΔDL2).

The non-representative communication apparatus 20 transmits a SL signal at a timing after the switching time (ΔTRX) from reception to transmission. In addition, the representative communication apparatus 20 receives the SL signal at a timing after ΔTRX and the propagation delay time (ΔSL).

Accordingly, the timing difference between the DL transmission of the base station 10 and the SL reception by the representative communication apparatus 20 becomes Δtotal = (ΔDL2-ΔDL1) + ΔTRX + ΔSL. This Δtotal is the Gap when switching between DL and SL.

In the case where the distance between the communication apparatuses 20 is sufficiently short and ADL1 = ADL2 and ΔSL = 0 can be assumed, Δtotal = ΔTRX is obtained. Furthermore, if ΔTRX = 0 can be assumed, Gap is not required for switching between DL and SL. However, switching from SL to UL requires Gap for the same reason as switching from DL to UL.

### (Example 2)

Next, an Example 2 will be described. Example 2 may be performed in combination with Example 1 or may be performed independently of Example 1. Hereinafter, Example 2 will be described as being implemented in combination with Example 1. That is, the Example 2 described herein assumes the operation of the Example 1.

In Example 2, information (e.g., DCI) notified from the base station 10 to the communication apparatus 20 in UL scheduling (i.e., allocation of UL resources) may include information specifying the communication apparatus 20 that performs UL transmission. In other words, information (e.g., DCI) notified to the communication apparatus 20 from the base station 10 includes information specifying the communication apparatus 20 as a representative.

More specifically, for example, by RRC signaling, the base station 10 notifies the plurality of communication apparatuses 20 of information indicating that the plurality of communication apparatuses 20 belong to a certain group. That is, the group is configured from the base station 10 to the plurality of communication apparatuses 20. The base station 10 transmits a DCI including information instructing to perform UL transmission to a communication apparatus 20 caused to perform UL transmission in the group. The information instructing to perform UL transmission may be, for example, an index of the communication apparatus 20. The information instructing to perform UL transmission may also be a specific RNTI of the communication apparatus 20. The specific RNTI may be configured from the base station 10 for each communication apparatus 20 in the group, along with the configuration information of the group, such as by RRC signaling.

For example, when the base station 10 causes a particular communication apparatus 20 to perform UL transmission within a group, the base station 10 transmits a DCI in which CRC is masked with a specific RNTI of the particular communication apparatus 20. Of the plurality of communication apparatuses 20 in the group, the particular communication apparatus 20 capable of decoding the DCI recognizes performing UL transmission. The DCI in which CRC is masked with a specific RNTI may also be a DCI that contains information about UL resource transmitted in the DL region described in Example 1.

That is, the DCI may include information instructing the communication apparatus 20 to perform UL transmission and information of UL resources for UL transmission. In addition, the DCI including the information instructing the communication apparatus 20 to perform UL transmission and DCI including the information of the UL resource for the UL transmission may be transmitted separately from the base station 10.

As described above, by allowing the base station 10 to specify the communication apparatus 20 to perform UL transmission, for example, the UL transmission can be alternated. Usually, the power consumption of UL transmission is higher than that of SL transmission, so that the power consumption of a particular communication apparatus 20 can be avoided by switching UL transmission.

By enabling the base station to specify the communication apparatus 20 that performs UL transmission, for example, it is possible to dynamically select a communication apparatus 20 of good UL quality as a communication apparatus 20 performing UL transmission. This can improve the frequency utilization efficiency.

The number of communication apparatuses 20 designated by the base station 10 as the communication apparatus 20 for executing UL transmission may be one or more.

In the case where a plurality of communication apparatuses 20 are designated as communication apparatuses 20 that execute UL transmission from the base station 10, for example, each of the designated plurality of communication apparatuses 20 receives the same information from each communication apparatus 20 that does not transmit UL. That is, for example, in the group of the communication apparatuses 20A to 20D, when the communication apparatuses 20A and 20B are designated as communication apparatuses for performing UL transmission, the communication apparatus 20A receives data 1 from the communication apparatus 20C, receives data 2 from the communication apparatus 20D, and the communication apparatus 20B receives data 1 from the communication apparatus 20C, and receives data 2 from the communication apparatus 20D.

The communication apparatuses 20A and 20B transmit data 1 and data 2 to the base station 20 using the same UL resource. The communication apparatuses 20A and 20B may also transmit data 1 and data 2 in a diversity transmission manner to the base station 10 using different UL resources (different time and frequency resources).

In addition, when a plurality of communication apparatuses 20 are designated as communication apparatuses 20 that execute UL transmission from the base station 10, the information transmitted between the plurality of communication apparatuses 20 may be shared. This corresponds to the transmission of a multi-user MIMO. The method of sharing may be, for example, notified from the base station 10 to the plurality of communication apparatuses 20 by a DCI or the like along with the UL transmission instruction information, or notified by one or more combinations of the DCI, MAC, or RRC separately from the UL transmission instruction information. In addition, instead of designating the method of sharing from the base station 10 to the plurality of communication apparatuses 20, the method of sharing is predetermined (e.g., specified in the standard), and the plurality of communication apparatuses 20 may perform the transmission by the method of sharing in accordance with the provisions.

As an example, the sharing may be determined based on the time and frequency resources at which the signal of the SL was received, or the sharing may be determined based on the index (UE-index) of the communication apparatus 20 transmitting the signal of the SL.

Specifically, for example, it is assumed that the communication apparatuses 20A and 20B are designated as communication apparatuses that perform UL transmission in a group of the communication apparatuses 20A to 20D. Also, time and frequency resources belonging to a region of frequencies above a certain frequency are defined as time and frequency resource E, and time and frequency resources belonging to a region of frequencies below that frequency are defined as time and frequency resource F. For example, the communication apparatus 20A transmits data received with the time frequency resource E to the base station 10 and the communication apparatus 20B transmits data received with the time frequency resource F to the base station 10.

For example, in the group of the communication apparatuses 20A to 20D, assuming that the communication apparatuses 20A and 20B are designated as communication apparatuses that perform UL transmission, it is assumed that the index of the communication apparatus 20C is UE-C and the index of the communication apparatus 20D is UE-D. In this case, for example, the communication apparatus 20A transmits a received signal whose source UE index is UE-C to the base station 10, and the communication apparatus 20B transmits a received signal whose source UE index is UE-D to the base station 10. The source UE index may be included in the received signal or, in the case of decoding the received signal, may be a UE-specific RNTI used when the decoding was successful.

In addition, in the case of sharing UL transmission, the plurality of communication apparatuses 20 that perform UL transmission may receive the same signal in SL and transmit different signals, or the plurality of communication apparatuses 20 that perform UL transmission may each receive only the signal that is transmitted by itself and transmit the signal. For example, in the group of the communication apparatuses 20A to 20D, when the communication apparatuses 20A and 20B are designated as communication apparatuses for performing UL transmission, the communication apparatus 20A receives data 1 from the communication apparatus 20C, receives data 2 from the communication apparatus 20D, and the communication apparatus 20B receives data 1 from the communication apparatus 20C, receives data 2 from the communication apparatus 20D. Also, the communication apparatus 20A may receive data 1 (data transmitted in UL by the communication apparatus 20A) from the communication apparatus 20C, and the communication apparatus 20B may receive data 2 (data transmitted in UL by the communication apparatus 20B) from the communication apparatus 20D.

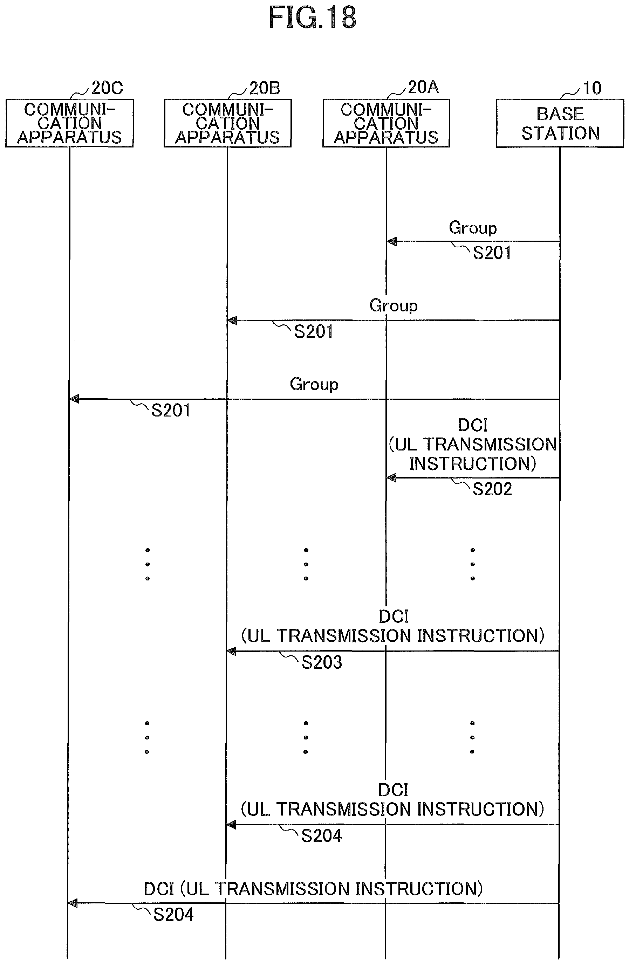

An example of the operation of Example 2 will be described with reference to Fig. 18. FIG. 18 illustrates a case in which a group of communication apparatuses 20A-20C is formed. In S201, information indicating that each communication apparatus 20 belongs to the group is transmitted, for example, by RRC signaling, and the configuration of the group is performed. In the example shown in FIG. 18, there may be no representative communication apparatus, or the communication apparatus performing UL transmission may be interpreted as a representative communication apparatus.

In S202, a DCI including an UL transmission instruction is transmitted from the base station 10 to the communication apparatus 20A. Thereafter, for example, the communication apparatus 20A performs UL transmission in the manner described in Example 1. An indication of an UL transmission once made may be valid only for the UL transmission immediately after receiving the indication of the UL transmission (i.e., canceled after the UL transmission), or may be canceled, for example, after a predetermined period of time or after a predetermined number of slots, or may be canceled by receiving a DCI indicating cancelation. The DCI indicating cancelation is masked by a group common RNTI, which may include information indicating another communication apparatus 20 as a communication apparatus 20 that performs UL transmission.

In S203, for example, a DCI is transmitted including instruction information for releasing the communication apparatus 20A from UL transmission and information specifying the communication apparatus 20B as the communication apparatus 20 for performing UL transmission. Thereafter, for example, the communication apparatus 20B performs UL transmission in the manner described in Example 1. At a point prior to S204, the communication apparatus 20B is released from the apparatus for performing UL transmission.

In S204, for example, a DCI including information specifying the communication apparatus 20B and the communication apparatus 20C as the communication apparatus 20 for performing UL transmission is transmitted. Thereafter, for example, the communication apparatus 20B and the communication apparatus 20C execute UL transmission by the method described in Example 1 and the method described in Example 2.

In the second embodiment, the communication apparatus 20 that is instructed to execute the UL transmission from the base station 10 monitors (receives) SL. The communication apparatus 20 may not transmit SL at a slot that receives an instruction for executing UL transmission. In addition, the communication apparatus other than the communication apparatus 20 that received the instruction for executing UL transmission performs SL transmission, but may not execute SL reception.

### (Example 3)

Next, Example 3 will be described. Example 3 may be implemented in combination with Example 1, Example 2, or Example 1+2, or may be implemented independently of Examples 1 and 2. Hereinafter, Example 3 will be described as being implemented in combination with Example 1. That is, the Example 3 described herein assumes the operation of the Example 1.

In the Example 3, when the representative communication apparatus 20 fails in SL reception, the representative communication apparatus 20 or the base station 10 transmits a SL retransmission request to the communication apparatus 20 (the communication apparatus 20 that performs SL transmission) other than the representative communication apparatus 20. For example, the representative communication apparatus 20 may determine that the SL reception failed because the check of the CRC attached to the SL signal (data or control information) became NG.

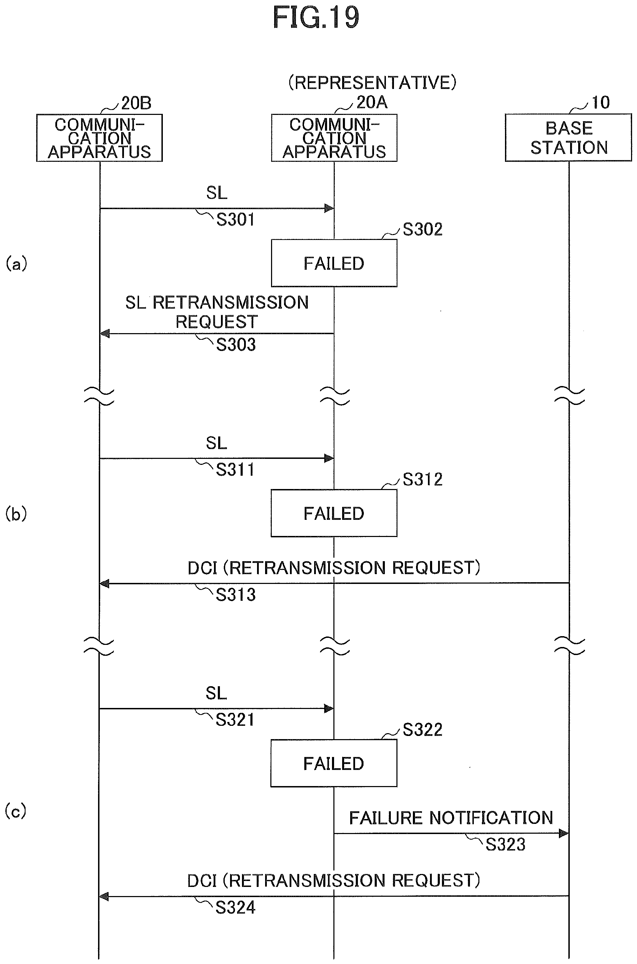

An example of operation in Example 3 will be described with reference to FIG. 19. In the case of Fig. 19(a), in S301, the communication apparatus 20B transmits a signal by SL, and the communication apparatus 20A (representative) attempts to receive the signal, but CRC check becomes NG, and it is determined that the SL reception failed (S302). In S303, the communication apparatus 20A (representative) transmits a SL retransmission request to the communication apparatus 20B. The SL retransmission request may be transmitted by PSBCH, transmitted by PSCCH as a SCI, or transmitted by other channels or signals.

In the case of FIG. 19(b), in S311, the communication apparatus 20B transmits a signal by SL and the communication apparatus 20A (representative) attempts to receive the signal, but CRC check becomes NG, and it is determined that the SL reception failed (S312). Here, as an example, it is assumed that a signal of SL is transmitted from the communication apparatus 20B using a SL resource allocated based on a SR transmitted from the communication apparatus 20B to the base station 10. In this case, the base station 10 detects that the signal is not received by the UL from the communication apparatus 20A (representative) even after a predetermined time has elapsed after receiving the SR, determines that the SL reception in the communication apparatus 20A (representative) has failed, and transmits the SL retransmission request to the communication apparatus 20B (S313). The SL retransmission request is executed using, for example, DCI.

In the case of Fig. 19(c), in S321, the communication apparatus 20B transmits a signal by SL, and the communication apparatus 20A (representative) attempts to receive the signal. However, CRC check becomes NG, and it is determined that the SL reception failed (S322). Then, the communication apparatus 20A (representative) transmits information indicating that the SL reception has failed to be transmitted to the base station 10 (S323). The base station 10 that receives the information determines that the SL reception in the communication apparatus 20A (representative) has failed, and transmits the SL retransmission request to the communication apparatus 20B (S324). The SL retransmission request is executed using, for example, DCI.

In accordance with Example 3, a representative communication apparatus 20 may receive signals more reliably from other communication apparatuses 20.

### (Example 4)

Next, Example 4 will be described. In Example 4, a representative communication apparatus 20 transmits a signal received by the DL to a communication apparatus 20 other than a representative by SL. This example is particularly effective when, for example, a representative communication apparatus 20 is able to communicate well with the base station 10, whereas a non-representative communication apparatus 20 is unable to communicate well with the base station 10. Further, in Example 4, as in Example 1, since the DL resource and the SL resource are associated (related), the relationship between the timing of DL reception and the timing of SL transmission can be clarified, and the time taken from the DL reception to SL transmission can be shortened (minimized).

Example 4 may be implemented in combination with Example 1, Example 2, Example 3, Example 1+2, Example 1+3, or Example 1+2+3, or may be implemented separately from Examples 1, 2, and 3. Here, it is assumed that Example 4 is implemented in combination with Example 1.

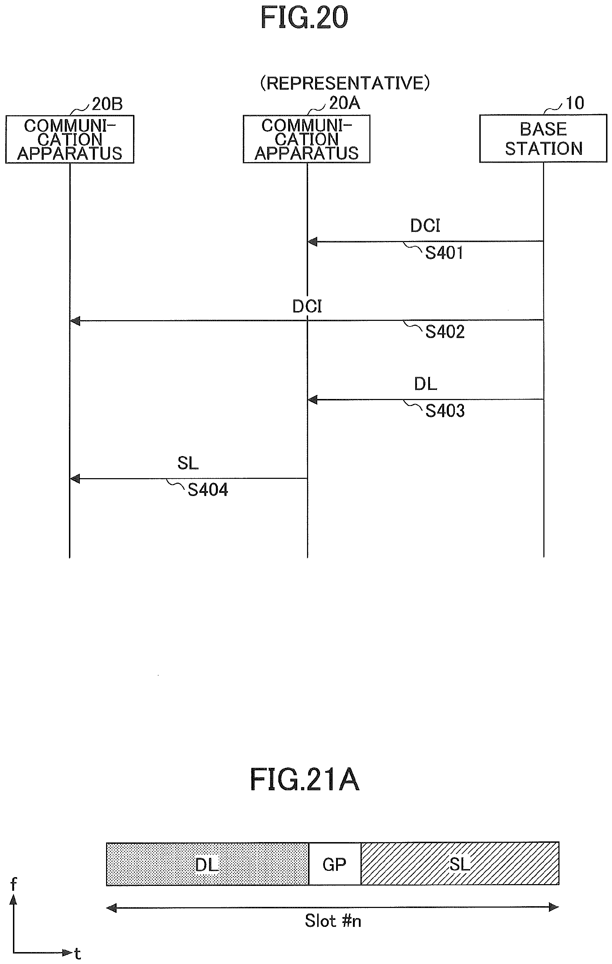

Referring to FIG. 20, an operation example of Example 4 will be described. The example operation shown in FIG. 20 is an example where the SL resources used by the communication apparatus 20 are dynamically allocated from the base station 10 along with the DL resources.

In the example illustrated in FIG. 20, the communication apparatus 20A and the communication apparatus 20B form one group. Although more communication apparatuses can form a group, in FIG. 20, two communication apparatuses belonging to the group are shown for ease of understanding operation. The communication apparatus 20A is representative.

In S401, S402, the base station 10 transmits a DCI by PDCCH. The DCI transmitted in S401 and S402 is, for example, one DCI in which the communication apparatus 20 (in the example of Fig. 20, the communication apparatus 20A and the communication apparatus 20B) within the group can decode commonly by using the group common RNTI (or RNTI of the communication apparatus 20A (representative) which the communication apparatus 20A (representative)and the communication apparatus 20B hold commonly). The DCI includes, for example, information about DL resources allocated to communication apparatus 20A (representative) and information about SL resources.

In S403, the communication apparatus 20 (representative) receives a signal of DL from the base station 10 using the DL resource allocated by the DCI and transmits the signal to the communication apparatus 20B using the SL resource allocated by the DCI (S404). The communication apparatus 20B receives a signal transmitted from the communication apparatus 20A (representative) using the SL resource allocated by the DCI.

As in the case of Example 1, the SL resource may be configured to the communication apparatus 20A (representative) and the communication apparatus 20B by the higher-layer signaling (RRC, MAC, etc.) instead of the DCI. In this case, the DCI may not contain the SL resource allocation information.

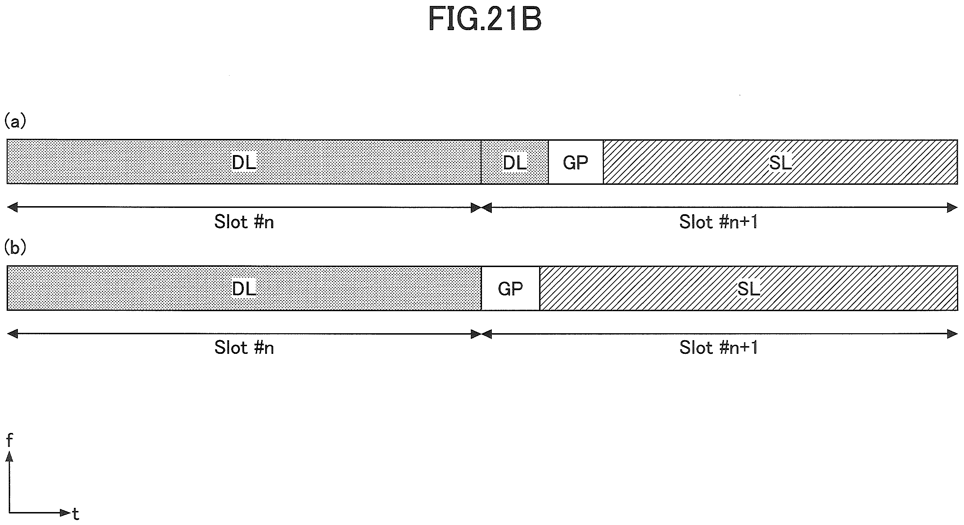

FIGS. 21A and 21B are diagrams illustrating an example of allocation of DL and SL resources. Similar to FIGS. 13A and 13B, FIGS. 21A and 21B are diagrams focusing on the time direction (transverse), and the frequency direction (longitudinal) length of each slot may be any one. In addition, the "slot" is used as the time unit for transmission and reception (which may be called the Transmission Time Interval (TTI)), but this is only one example. "Subframe" may be used instead of "slot". In addition, time units (time intervals) other than "slots" and "subframes" may be used.

The length of time of each slot may be dependent upon the subcarrier spacing. In addition, the configuration of each slot (the symbol position and symbol length of the DL region, the symbol position and symbol length of the Gap region, the symbol position and symbol length of the SL region, the symbol position and symbol length of the UL region, etc.) may be configured by RRC signaling beforehand or the like for each communication apparatus 20, or may be dynamically configured by DCI or the like.

In FIGS. 21A and 21B, the region denoted by "DL" represents a resource (in particular one or more symbols) that can be used for DL. The resource actually used for DL communication may be a portion of the resource in the area denoted by "DL", or it may be a whole resource. Similarly, the area denoted by "SL" denotes a resource that can be used for SL. The resource actually used for SL communication (allocated or selected) may be a part of the resource in the area denoted by "SL", or may be all of the resources.

Fig. 21A illustrates an example when DL and SL resources are assigned to the same slot. As shown in FIG. 21A, the slot includes the DL region and the SL region in time order. It also has a Gap between the DL region and the SL region for switching DL and SL. It is also possible to adopt a configuration that does not provide such Gap.

In the example shown in FIG. 21A, for example, in S401 of FIG. 20, the communication apparatus 20A (representative) receives a DCI from the base station 10 that includes DL resource information and SL resource information in the DL region shown in FIG. 21A. The communication apparatus 20A (representative) receives a signal (e.g., data) transmitted from the base station 10 with a DL resource in the DL region specified by the DCI. The communication apparatus 20A (representative) transmits a signal received from the base station 10 with a SL resource in the SL region specified by the DCI.

In the example illustrated in FIG. 21A, for example, in S402 of FIG. 20, the communication apparatus 20B grasps the SL resource from the DCI received by the DL resource in the DL region illustrated in FIG. 21A, and receives the signal transmitted from the communication apparatus 20A (representative) with the SL resource in the SL region.

Figure 21B illustrates an example where DL and SL resources are assigned to separate slots. The slots to which DL resources are allocated and the slots to which SL resources are allocated are continuous. In order to minimize the delay between DL reception and SL transmission, it is preferable that the slots be continuous in this manner. However, slots to which DL resources are allocated and slots to which SL resources are allocated may be discontinuous.

In the example of FIG. 21B(a), slot #n has only a DL region. The slot #n may include an UL region in addition to the DL region. The slot #n+1 includes the DL region and the SL region in the order of time. It also has a Gap between the DL region and the SL region for switching DL and SL.

In the example shown in Fig. 21B(a), for example, the communication apparatus 20A (representative) receives a DCI containing information of the DL resource with the resource in the DL region of slot #n and receives a signal from the base station 10 with the DL resource. In addition, the communication apparatus 20A (representative) receives a DCI containing information of the SL resource with the DL resource in the DL region of the slot #n+1 and transmits a signal received from the base station 10 with the SL resource. The communication apparatus 20B receives a DCI containing SL resource information with a DL resource in the DL region of slot #n+1 and receives a signal transmitted from the communication apparatus 20A (representative) using the SL resource.

In the example of FIG. 21B(b), slot #n has only a DL region. The slot #n may include an UL region in addition to the DL region. The slot #n+1 also has a SL region. Also, there is a Gap for switching DL and SL between the DL region of slot #n and the SL region of slot #n+1

In the example illustrated in Fig. 21B(b), for example, the communication apparatus 20A (representative) and the communication apparatus 20B receive a DCI including information of the DL resource and information of the SL resource with the resource in the DL region of the slot #n, and the communication apparatus 20A (representative) receives a signal from the base station 10 with the DL resource. In addition, the communication apparatus 20A (representative) transmits a signal received from the base station 10 using SL resources in the SL region of slot #n+1 specified in the DCI. The communication apparatus 20B receives a signal transmitted from the communication apparatus 20A (representative) with the SL resource of slot #n+1

### (Equipment Configuration)

Next, a functional configuration example of the base station 10 and the communication apparatus 20 that execute the process operation described so far will be described. The base station 10 and the communication apparatus may comprise all of the functions of Examples 1 to 4 described in this embodiment, or may comprise only some of the functions of Examples 1 to 4.

### <Base Station 10>

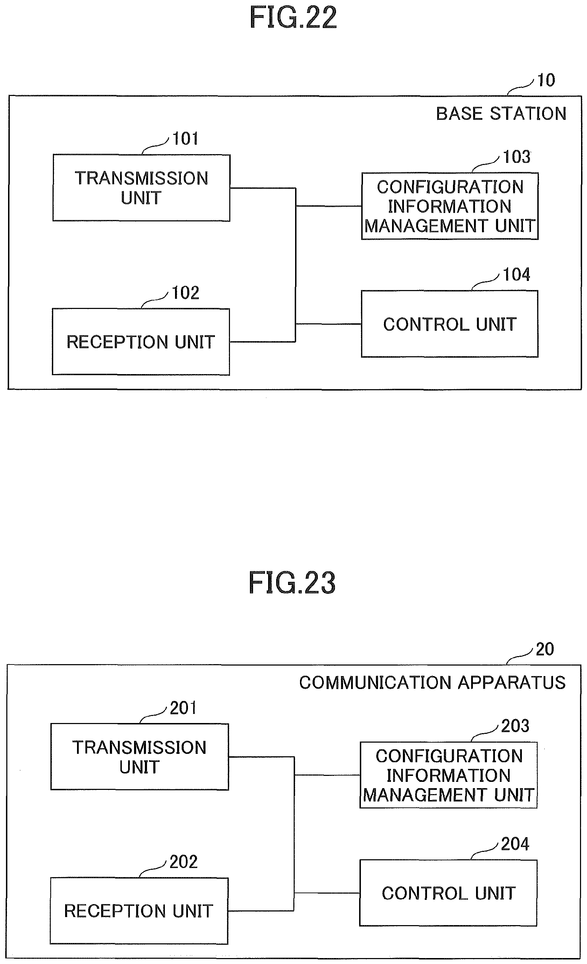

Fig. 22 is a diagram illustrating an example of a functional configuration of a base station 10. As illustrated in FIG. 22, the base station 10 includes a transmission unit 101, a reception unit 102, a configuration information management unit 103, and a control unit 104. The functional configuration shown in FIG. 22 is only one example. If the operation according to the present embodiment can be executed, the name of the functional classification and the functional portion may be any one. The transmission unit 101 may be referred to as a transmitter, and the reception unit 102 may be referred to as a receiver.

The transmission unit 101 includes a function of generating a signal to be transmitted to the communication apparatus 20 and transmitting the signal by radio. The reception unit 102 includes a function for receiving various signals transmitted from the communication apparatus 20 and acquiring information of a higher layer, for example, from the received signal. The reception unit 102 includes a function for measuring the received signal and acquiring a quality value.

The configuration information management unit 103 stores preconfigured configuration information, configuration information received from the communication apparatus 20, and the like. The configuration information related to the transmission may be stored in the transmission unit 101, and the configuration information related to the reception may be stored in the reception unit 102. The control unit 104 controls the base station 10. For example, the control unit 104 executes the allocation of UL resources and the allocation of SL resources described in Example 1, the allocation of DL resources and the allocation of SL resources described in Example 4. The function of the control unit 104 related to the transmission may be included in the transmission unit 101, and the function of the control unit 104 related to the reception may be included in the reception unit 102.

For example, the control unit 104 is configured to select at least one communication apparatus in a plurality of communication apparatuses constituting a group as a communication apparatus executing uplink transmission, and the transmission unit 101 may be configured to transmit control information including an instruction for executing uplink transmission to a communication apparatus selected by the control unit.

### <Communication apparatus 20>

Fig. 23 is a diagram illustrating an example of a functional configuration of a communication apparatus 20. As illustrated in FIG. 23, the communication apparatus 20 includes a transmission unit 201, a reception unit 202, a configuration information management unit 203, and a control unit 204. The functional configuration shown in Fig. 23 is only one example. As long as the operation according to the present embodiment can be executed, the name of the functional classification and the functional portion may be any one. The transmission unit 201 may be referred to as a transmitter, and the reception unit 202 may be referred to as a receiver. The communication apparatus 20 may be a representative communication apparatus or a communication apparatus other than a representative communication apparatus.

The transmission unit 201 creates a transmission signal from transmission data and transmits the transmission signal by radio. The reception unit 202 receives a variety of signals by radio and acquires a higher layer signal from the received physical layer signal. The reception unit 202 includes a function for measuring the received signal and acquiring a quality value.

The configuration information management unit 203 stores preconfigured configuration information, the configuration information received from the base station 10, and the like. The configuration information related to the transmission may be stored in the transmission unit 201, and the configuration information related to the reception may be stored in the reception unit 202. The control unit 204 controls the communication apparatus 20. The function of the control unit 204 related to the transmission may be included in the transmission unit 201, and the function of the control unit 204 related to the reception may be included in the reception unit 202.

In addition, the reception unit 202 may be configured to receive allocation information of an uplink resource from the base station, and the transmission unit 201 may be configured to transmit a signal received by a sidelink resource associated with the uplink resource to the base station with the uplink resource.

The reception unit 202 receives control information from the base station including, for example, allocation information of the uplink resource and allocation information of the sidelink resource. The reception unit 202 also receives the signal in a sidelink region in a slot, for example, and the transmitting unit 201 transmits the signal in an uplink region in the slot. The reception unit 202 also receives the signal in a sidelink region in a slot, and the transmission unit 201 may transmit the signal in an uplink region in another slot that is continuous with the slot.

If the reception unit 202 fails to receive the signal, the base station or the transmission unit 201 may transmit a retransmission request.

In addition, the reception unit 202 may be configured to receive allocation information of a resource for downlink from the base station, and the transmission unit 201 may be configured to transmit the signal received by the downlink resource with a sidelink resource associated with the downlink resource.

### <Hardware Configuration>

The block diagram (Figs. 22 to 23) used in the description of the above-described embodiment illustrates a block of functional units. These functional blocks (components) are implemented by any combination of hardware and/or software. Further, the means for implementing each functional block is not particularly limited. That is, each functional block may be implemented by one device with a physical and/or logical combination of elements, or two or more devices that are physically and/or logically separated may be connected directly and/or indirectly (e.g., wired and/or radio) and implemented by a plurality of these devices.

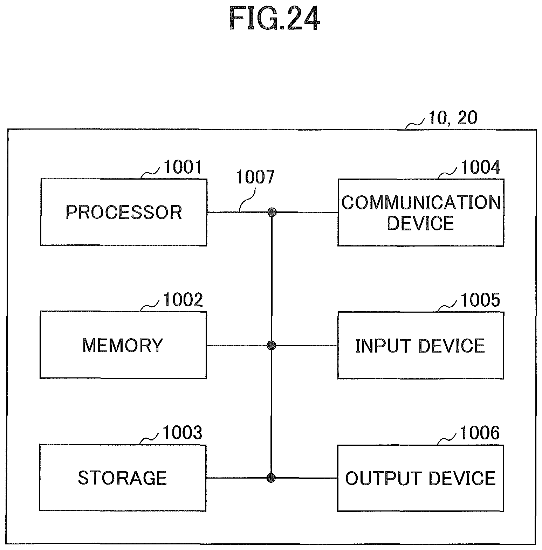

For example, any of the communication apparatus 20 and the base station 10 according to an embodiment of the present invention may function as a computer performing processing according to the present embodiment. Fig. 24 is a diagram illustrating an example of a hardware configuration of a communication apparatus 20 and a base station 10 according to the present embodiment. Each of the aforementioned communication apparatuses 20 and base stations 10 may be physically configured as a computer device including a processor 1001, a memory 1002, a storage 1003, a communication device 1004, an input device 1005, an output device 1006, a bus 1007, and the like.

In the following description, the term "device" can be read as a circuit, device, unit, etc. The hardware configuration of the communication apparatus 20 and base station 10 may be configured to include one or more of the devices illustrated as 1001-1006 in the figure, or may be configured without some devices.

Each function in the communication apparatus 20 and the base station 10 is realized by having the processor 1001 reads a predetermined software (program) on hardware such as the processor 1001, the memory 1002, and the like, so that the processor 1001 performs an operation and controls communication by the communication device 1004, reading and/or writing of data in the memory 1002 and the storage 1003.

The processor 1001, for example, operates an operating system to control the entire computer. The processor 1001 may be configured to include a central processing unit (CPU) having an interface with peripherals, a control device, an operation device, and registers.

In addition, the processor 1001 loads programs (program codes), software modules or data from the storage 1003 and/or the communication device 1004 into the memory 1002, and executes various processes according to the loaded programs, software modules or data. As a program, a program that causes a computer to execute at least a portion of the operation described in the above-described embodiment is used. For example, the transmitter 101, the receiver 102, the configuration information management unit 103, and the controller 104 of the base station 10 illustrated in FIG. 22 may be implemented by a control program stored in the memory 1002 and operated by the processor 1001. The transmitter 201 of the communication apparatus 20 illustrated in FIG. 23, the receiver 202, the configuration information management unit 203, and the controller 204 may be implemented by a control program stored in the memory 1002 and operated by the processor 1001. Although the various processes described above have been described as being executed in one processor 1001, they may be executed simultaneously or sequentially by two or more processors 1001. The processor 1001 may be implemented in one or more chips. The program may be transmitted from the network via a telecommunications line.

The memory 1002 may be a computer-readable recording medium composed of at least one of a ROM (Read Only Memory), an EPROM (Erasable Programmable ROM), an EEPROM (Electrically Erasable Programmable ROM), a RAM (Random Access Memory) and the like. The memory 1002 may be referred to as a register, a cache, a main memory (main storage device), etc. The memory 1002 may store executable programs (program codes), software modules, and the like for implementing a process according to the embodiment of the present invention.

The storage 1003 is a computer-readable recording medium composed, for example, of at least one of an optical disk such as a CD-ROM (Compact Disk ROM), a hard disk drive, a flexible disk, a magneto-optical disk (e.g., a compact disk, a digital versatile disk, and a Blu-ray (registered trademark) disk), a smart card, a flash memory (e.g., a card, a stick, and a key drive), a floppy (registered trademark) disk, and a magnetic strip. The storage 1003 may be referred to as an auxiliary storage device. The above-described storage medium may be, for example, a database including the memory 1002 and/or the storage 1003, a server, or any other suitable medium.

The communication device 1004 is a hardware (transceiver device) for communicating between computers over a wired and/or wireless network, and is also referred to, for example, as a network device, a network controller, a network card, a communication module, and the like. For example, the transmitter 201 and the receiver 202 of the communication apparatus 20 may be implemented in the communication device 1004. The transmitter 101 and the receiver 102 of the base station 10 may be implemented in the communication device 1004.

The input device 1005 is an input device (e.g., a keyboard, a mouse, a microphone, a switch, a button, a sensor, etc.) that receives an external input. The output device 1006 is an output device (e.g., a display, speaker, LED lamp, etc.) that performs outgoing output. The input device 1005 and the output device 1006 may be of an integrated configuration (e.g., a touch panel). The input device 1005 and the output device 1006 may be of an integrated configuration (e.g., a touch panel).

Each device, such as processor 1001 and memory 1002, is also connected by a bus 1007 for communicating information. The bus 1007 may be comprised of a single bus or may be comprised of different buses between devices.

In addition, the communication apparatus 20 and the base station 10 may each include hardware such as a microprocessor, a digital signal processor (DSP), an ASIC (Application Specific Integrated Circuit), a PLD (Programmable Logic Device), and a FPGA (Field Programmable Gate Array), wherein the hardware may implement some or all of the functional blocks. For example, processor 1001 may be implemented in at least one of the hardware.

### (Summary of embodiments)

This specification discloses at least the following communication apparatuses and base stations.

### <Item 1>

A communication apparatus including:
a reception unit configured to receive assignment information of an uplink resource from a base station; and
a transmission unit configured to transmit, to the base station, by the uplink resource, a signal received by a sidelink resource associated with the uplink resource.

The above configuration enables the relationship between the timing of sidelink communication and the timing of communication between the representative communication apparatus and the base station to be clarified. This can reduce, for example, the delay in communication.

### <Item 2>

The communication apparatus as described in item 1, wherein the reception unit receives, from the base station, control information including assignment information of the uplink resource and assignment information of the sidelink resource.

The above configuration allows for efficient reception of control information, for example.

### <Item 3>

The communication apparatus as described in item 1 or 2, wherein the reception unit receives the signal in a sidelink region in a slot, and the transmission unit transmits the signal in the uplink region in the slot.

The above configuration allows for a shorter time between receiving the signal on the sidelink and sending it on the uplink.

### <Item 4>

The communication apparatus as described in item 1 or 2, wherein the reception unit receives the signal in a sidelink region in a slot, and the transmission unit transmits the signal in an uplink region in another slot that is contiguous with the slot.

The above configuration allows for a shorter time between receiving the signal on the sidelink and sending it on the uplink.

### <Item 5>

The communication apparatus as described in any one of items 1-4, wherein, when the reception unit fails reception of the signal, the base station or the transmission unit transmits a retransmission request.

With the above configuration, for example, a communication apparatus that performs uplink transmission can receive signals from other communication apparatuses reliably.

### <Item 6>

A communication apparatus including:
a reception unit configured to receive assignment information of a downlink resource from a base station; and
a transmission unit configured to transmit a signal received by the downlink resource by a sidelink resource associated with the downlink resource.

The above configuration enables the relationship between the timing of sidelink communication and the timing of communication between the representative communication apparatus and the base station to be clarified. This can reduce, for example, the delay in communication.

### <Item 7>

A base station including:
a control unit configured to select at least one communication apparatus of a plurality of communication apparatuses forming a group as a communication apparatus that executes uplink transmission; and
a transmission unit configured to transmit control information including execution instruction of uplink transmission to the communication apparatus selected by the selection unit.

According to the above configuration, it is possible to cause a communication apparatus of good radio quality to perform uplink transmission, for example. Also, the above configuration avoids, for example, performing uplink transmission only on a particular communication apparatus and avoids excessive power consumption of a particular communication apparatus.

### (Supplementary description of embodiments)

While embodiments of the present invention have been described above, the disclosed invention is not limited to such embodiments, and those skilled in the art will understand various modifications, modifications, alternatives, substitutions, and the like. Descriptions have been made using specific numerical examples to facilitate understanding of the invention, but, unless otherwise indicated, these values are merely examples and any suitable value may be used. In the above description, partitioning of items is not essential to the present invention. Matters described in two or more items may be combined if necessary. Matters described in one item may be applied to matters described in another item (as long as they do not conflict). The boundaries of functional parts or processing parts in the functional block diagram do not necessarily correspond to the boundaries of physical parts. Operations of multiple functional units may be physically performed in a single part, or operations of a single functional unit may be physically performed by multiple parts. The order of steps in the above described operating procedures according to an embodiment may be changed as long as there is no contradiction. For the sake of convenience, the communication apparatus 20 and the base station 10 have been described by using functional block diagrams. These apparatuses may be implemented by hardware, by software, or by combination of both. The software which is executed by a processor included in the communication apparatus 20 according to an embodiment and the software which is executed by a processor included in the base station 10 may be stored in a random access memory (RAM), a flash memory, a read-only memory (ROM), an EPROM, an EEPROM, a register, a hard disk drive (HDD), a removable disk, a CD-ROM, a database, a server, or any other appropriate recording medium.

Notification of information is not limited to the embodiments/embodiments described herein, but may be performed in other ways. For example, reporting of information may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block) and SIB (System Information Block)), and other signals or a combination thereof. Further, RRC signaling may be referred to as an RRC message, and may be an RRC connection setup (RRCC connection setup) message, an RRC connection reconfiguration (RRC connection registration) message, or the like.

Each aspect/embodiment described herein may be applied to LTE (Long Term Evolution), LTE-A (LTE-Advanced), SUPER 3G, IMT-Advanced, 4G, 5G, NR, FRA (Future Radio Access), W-CDMA (registered trademark), GSM (registered trademark), CDMA 2000, UMB (Ultra Mobile Broadband), IEEE 802.11 (Wi-Fi), IEEE 802.16 (WiMAX), IEEE 802.20, UWB (Ultra-Wide Band), Bluetooth (registered trademark), and a system that utilize other suitable systems and/or a next generation system expanded based on such a system.

The order of processes, sequences, flowcharts, etc. of each aspect/embodiment described in the present specification may be exchanged as long as there is no inconsistency. For example, for the methods described in the specification, the elements of the various steps are presented in an exemplary order and are not limited to a specific order presented.

The particular operation described herein to be performed by base station 10 may be performed by an upper node in some cases. It is apparent that in a network consisting of one or more network nodes having base stations 10, various operations performed for communication with communication devices 20 may be performed by base stations 10 and/or other network nodes other than base stations 10 (e.g., but not limited to MME or S-GW). As illustrated above, other network nodes other than base station 10 may be a combination of multiple other network nodes (e.g., MME and S-GW).

The aspects described in this specification may be used alone, may be used in combination, or may be switched with implementation thereof.

The communication apparatus 20 may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber stations, an access terminal, a mobile terminal, a wireless terminal, a remote terminal, a handset, a user agent, a mobile client, a client, or it may also be called by some other suitable terms.

The base station 10 may also be referred to, by those skilled in the art, as NB (Node B), eNB (enhanced Node B), Base Station, gNB, or several other suitable terms.

As used herein, the terms "determining" and "deciding" may encompass a wide variety of actions. The terms "determining" and "deciding" may be deemed to include, for example, judging, calculating, computing, processing, deriving, investigating, looking up (e.g., searching tables, databases or other data structures), and ascertaining. Further, the terms "determining" and "deciding" may be deemed to include, for example, receiving (e.g., receiving information), transmitting (e.g., transmitting information), input, output, and accessing (e.g., accessing data in memory). Moreover, the terms "determining" and "deciding", may be deemed to include, for example, resolving, selecting, choosing, establishing, and comparing (comparing). Namely, "determining" and "deciding" may include deeming that some operation is determined or decided.

The expression "on the basis of" used in the present specification does not mean "on the basis of only" unless otherwise stated particularly. In other words, the expression "on the basis of" means both "on the basis of only" and "on the basis of at least".

As long as "include", "including", and variations thereof are used in the specification or claims, these terms are intended to be inclusive in a manner similar to the term "comprising". Furthermore, the term "or" used in the specification or claims is intended to be not an exclusive "or".

In the entirety of the present disclosure, articles, such as a, an, or the in English that are added to a noun term by translation may indicate a plurality of the noun terms unless the articles obviously indicate a singular noun from the context.

While the invention has been described in detail, it will be apparent to those skilled in the art that the invention is not limited to the embodiments described herein. The invention can be implemented as modifications and modifications without departing from the spirit and scope of the invention as defined by the appended claims. Accordingly, the description herein is intended for illustrative purposes and does not have any limiting significance to the present invention.

### [Explanation of symbols]

- 101: Transmission unit
- 102: Reception unit
- 103: Configuration Information Management Unit
- 104: Control Unit
- 201: Transmission unit
- 202: Reception unit
- 203: Configuration Information Management Unit
- 204: Control unit
- 1001: Processor
- 1002: Memory
- 1003: Storage
- 1004: Communication device
- 1005: Input device
- 1006: Output device

## Claims

1. A communication apparatus comprising:
a reception unit configured to receive assignment information of an uplink resource from a base station; and
a transmission unit configured to transmit, to the base station, by the uplink resource, a signal received by a sidelink resource associated with the uplink resource.

2. The communication apparatus as claimed in claim 1, wherein the reception unit receives, from the base station, control information including assignment information of the uplink resource and assignment information of the sidelink resource.

3. The communication apparatus as claimed in claim 1 or 2, wherein the reception unit receives the signal in a sidelink region in a slot, and the transmission unit transmits the signal in the uplink region in the slot.

4. The communication apparatus as claimed in claim 1 or 2, wherein the reception unit receives the signal in a sidelink region in a slot, and the transmission unit transmits the signal in an uplink region in another slot that is contiguous with the slot.

5. The communication apparatus as claimed in any one of claims 1-4, wherein, when the reception unit fails reception of the signal, the base station or the transmission unit transmits a retransmission request.

6. A communication apparatus comprising:
a reception unit configured to receive assignment information of a downlink resource from a base station; and
a transmission unit configured to transmit a signal received by the downlink resource by a sidelink resource associated with the downlink resource.
